# FASCICULE DE BREVET EUROPEEN

(11) **EP 3 076 615 B1**
(45) Date de publication et mention de la délivrance du brevet: **20.02.2019**
(21) Numéro de dépôt: 16163298.9
(22) Date de dépôt: 31.03.2016
(51) Int. Cl.: H04L 12/771, H04L 29/06, H04L 12/715

(54) **PROCÉDÉ DE PROTECTION D'UN RÉSEAU DE COMMUNICATION, DISPOSITIF, ÉQUIPEMENT DE CONTRÔLE ET PROGRAMME D'ORDINATEUR ASSOCIÉS**
VERFAHREN ZUM SCHUTZ EINES KOMMUNIKATIONSNETZES, ENTSPRECHENDE VORRICHTUNG, KONTROLLAUSRÜSTUNG UND ENTSPRECHENDES COMPUTERPROGRAMM
METHOD FOR PROTECTING A COMMUNICATIONS NETWORK, ASSOCIATED DEVICE, CONTROL SYSTEM AND COMPUTER PROGRAM

(30) Priorité: 01.04.2015 FR 1552825
(43) Date de publication de la demande: 05.10.2016
(73) Titulaire: B<>COM, 35510 Cesson-Sévigné (FR)
(72) Inventeur: ZERKANE, Salaheddine, 35700 Rennes (FR); PHAN, Cao-Tanh, 35520 La Meziere (FR); ESPES, David, 29820 Bohars (FR); LE PARC, Philippe, 29200 Brest (FR); CUPPENS, Frédéric, 35340 Liffre (FR)
(74) Mandataire: Ermeneux, Bertrand

(56) Documents cités:
- US-A1- 2015 089 566
- MASOUD MOSHREF ET AL: "Flow-level state transition as a new switch primitive for SDN", HOT TOPICS IN SOFTWARE DEFINED NETWORKING, ACM, 2 PENN PLAZA, SUITE 701 NEW YORK NY 10121-0701 USA, 22 août 2014 (2014-08-22), pages 61-66, XP058053574, DOI: 10.1145/2620728.2620729 ISBN: 978-1-4503-2989-7
- Hyojoon Kim, Arpit Gupta, Muhammad Shahbaz, Joshua Reich*, Nick Feamster, Russ Clark: "Simpler Network Configuration with State-Based Network Policies", INTERNET ARTICLE , 10 juillet 2013 (2013-07-10), pages 1-13, XP002754858, Georgia Tech, *Princeton University Extrait de l'Internet: URL:https://smartech.gatech.edu/bitstream/ handle/1853/49181/GT-CS-13-04.pdf [extrait le 2016-02-25]

## Description

### 1. Domaine de l'invention

Le domaine de l'invention est celui de la sécurisation d'un réseau de communication vis-à-vis d'attaques d'équipements malveillants, par un système de protection de type pare-feu, en particulier dans le contexte de communications à états.

L'invention peut notamment, mais non exclusivement, s'appliquer aux réseaux de communication présentant une architecture de type SDN (pour «Software Data Network », en anglais).

### 2. Présentation de l'art antérieur

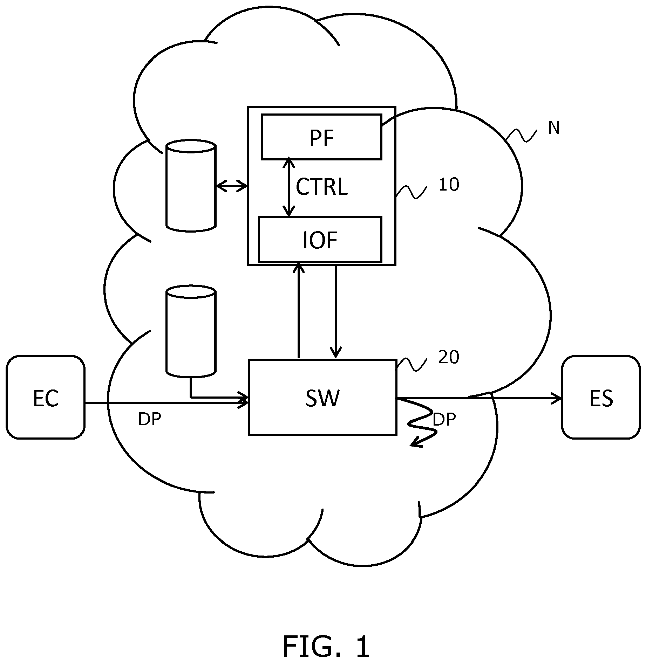

En relation avec la Figure **1****,** on considère un premier équipement de communication, dit équipement client EC et un deuxième équipement de communication, dit équipement serveur ES, tous deux aptes à se connecter par l'intermédiaire d'un réseau de télécommunications N.

On suppose que le réseau de communications N est organisé selon une architecture de type SDN et qu'il comprend au moins un équipement de contrôle 10 apte à contrôler un ou plusieurs équipements de commutation 20 (pour « switch », en anglais). Par simplicité, on a représenté un seul équipement de commutation 20 sur la Figure 1.

Le concept SDN décrit une architecture de réseau présentant un plan de contrôle séparé du plan de données. Des équipements du plan de données tels que l'équipement de commutation 20 mettent en oeuvre l'acheminement de paquets de données entre l'équipement de communication client ou source EC et l'équipement de communication serveur ou destination ES, tandis qu'un ou plusieurs équipement(s) de contrôle 10 ou « contrôleur » du plan de contrôle gère(nt), programme(nt) et maintien(nen)t les équipements du plan de données. Un équipement de contrôle bénéficie d'une vue globale et détaillée sur tout ou partie du réseau. Il est hébergé sur une plateforme qui est logiquement centralisée mais peut aussi être physiquement distribuée.

Le principal but du SDN est de réduire la complexité et les coûts élevés liés à l'hétérogénéité des applications et des équipements utilisés dans le réseau. Il s'appuie sur des protocoles standards qui permettent à différents équipements de communiquer. Le réseau est entièrement programmable par le biais des applications qui s'exécutent au niveau du contrôleur La gestion et l'implémentation de la politique réseau sont donc facilitées par la mise en oeuvre du plan de contrôle.

On considère en particulier une norme appelée « OpenFlow » destinée à spécifier une interface standard entre le plan de contrôle et le plan de données. Un module d'interface IOF permet à l'équipement de contrôle 20 d'installer des règles de traitement dans l'équipement de commutation 20 du plan de données. Ces règles implémentent le fonctionnement du plan de données tel que programmé par le plan de contrôle.

Notamment, une règle selon la norme OpenFlow permet de programmer le filtrage des paquets de données reçu par l'équipement de commutation 20. Dans un tel réseau, il est connu de déployer un système de pare-feu (pour « firewall », en anglais) permettant de protéger les équipements de communication connectés au réseau des intrusions provenant d'un réseau tiers (notamment internet) à l'aide d'un ensemble de règles de traitement spécifiques. Ces règles sont définies par l'équipement de contrôle 10 dans un module dit module pare-feu MPF, qui peut être ou non intégré à l'équipement de contrôle 10, stockées dans une table, dite table Openflow TOF et descendues aux équipements de commutation 20. De telles règles de traitement comprennent généralement, dans leurs préconditions, des informations de correspondance (pour « matching information » en anglais), comme par exemple des informations d'identification de l'équipement source et de l'équipement destination du paquet de données et comme action de traitement le renvoi du paquet à l'équipement de contrôle, sa transmission directe à l'équipement destinataire ou bien son rejet.

On connait de la demande de brevet publiée sous le numéro CN104104561 un système de pare-feu, adapté à un réseau SDN et à des communications entre équipements selon une connexion définie par un protocole de transport à états, tel que par exemple le protocole TCP (pour « Transport Control Protocol », en anglais. Un autre exemple de pare-feu adapté à un réseau SDN est décrit dans le document XP058053574.

Un protocole de transport à état contrôle la connexion dans les deux sens entre l'équipement client et l'équipement serveur. Il définit un certain nombre d'états de la connexion et les transitions possibles d'un état à un autre. En outre, il organise un échange courtois de messages entre l'équipement client et l'équipement serveur lors de l'établissement et la fin de connexion.

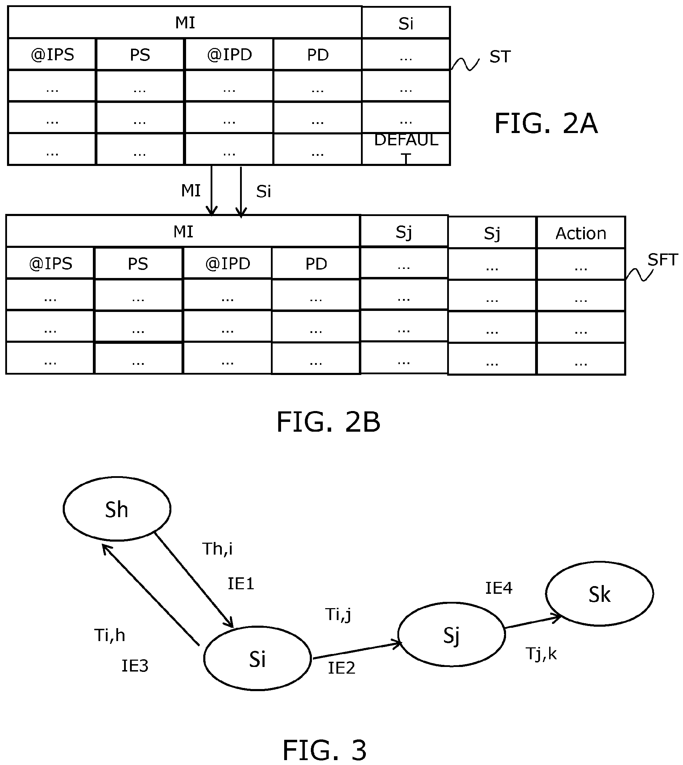

La solution proposée par ce document pour prendre en compte les états du protocole de transport consiste à remplacer la table de règles de traitement Openflow par deux tables :
- une table d'état ST (« state table »), illustrée par la Figure **2A****,** comprenant les informations de correspondance MI de la règle et l'état courant Si du protocole pour la connexion identifiée. Elle comprend une entrée associant à des informations de correspondance quelconques l'état courant « default ». ;
- une nouvelle table SFT (« shifted flow table »), illustrée par la Figure **2B****,** qui associe aux informations de correspondance MI et à l'état courant Si de la connexion, un état suivant Sj et une action de traitement à déclencher par l'équipement de commutation.

Si les préconditions d'aucune règle de traitement ne sont satisfaites, la connexion est considérée comme étant dans l'état « default » et le paquet de données est remonté par défaut à l'équipement de contrôle.

Si l'état suivant est distinct de l'état courant, l'action à déclencher est une retransmission du paquet de données à l'équipement de contrôle pour qu'il valide le changement d'état et décide d'une action associée au nouvel état courant

Si l'état suivant est identique à l'état précédent, l'action peut être une retransmission directe au destinataire ou un rejet du paquet de données.

### 3. Inconvénients de l'art antérieur

Un premier inconvénient de cette solution est qu'elle n'est plus conforme au standard Openflow, car elle en modifie les tables de règles de traitement dans l'équipement de commutation pour y ajouter des informations supplémentaires sur les états actuels et les états suivants des connexions pour chaque session. On comprend que des fonctions du plan de contrôle sont ainsi transférées dans le plan de données.

Un deuxième inconvénient est qu'elle nécessite des ressources de stockage et de calcul accrues au niveau de l'équipement de commutation pour sauvegarder la table supplémentaire et mettre en oeuvre les fonctions de contrôle transférées.

Un troisième inconvénient est qu'elle génère un trafic de données accru entre l'équipement de commutation et l'équipement de contrôle qu'elle sollicite pour chaque paquet de données afin de confirmer la possibilité de passage d'un état à un autre et aussi pour synchroniser les entrées de ses tables de correspondance. Les fonctions de contrôle sont finalement dupliquées dans le plan de données, ce qui engendre un gaspillage des ressources du réseau.

Un quatrième inconvénient est qu'elle n'est pas robuste aux attaques de déni de service. En effet, si par exemple un paquet, dont la source n'est pas listée dans la table des connexions, est reçu par l'équipement de commutation, alors il est par défaut remonté au contrôleur qui est en charge des vérifications d'accès. Dans ce cas un attaquant peut exploiter cette brèche pour faire un déni de service et inonder le contrôleur de paquets inconnus. Le filtrage mis en oeuvre par l'équipement de commutation est donc insuffisant.

### 4. Objectifs de l'invention

L'invention vient améliorer la situation.

L'invention a notamment pour objectif de pallier ces inconvénients de l'art antérieur.

Plus précisément, un objectif de l'invention est de proposer une solution de pare-feu plus efficace et plus sécurisée qui prenne en compte la machine à état du protocole de communication, tout en restant conforme au protocole Openflow.

### 5. Exposé de l'invention

Ces objectifs, ainsi que d'autres qui apparaîtront par la suite, sont atteints à l'aide d'un procédé de protection d'un réseau de communication, par l'intermédiaire duquel un équipement de communication client, est apte à établir une connexion à états selon un protocole de transport à états avec un équipement de communication serveur, et à lui transmettre des paquets de données , ledit procédé étant caractérisé en ce qu'il comprend les étapes suivantes, destinées à être mises en oeuvre par un équipement de contrôle du réseau de communication :
- Réception d'un message de requête, ledit message comprenant au moins des informations d'identification de la connexion et d'au moins une information représentative d'un événement de connexion, ledit message ayant été envoyé par un équipement de commutation du réseau, par application d'une première règle de traitement d'un paquet de données émis par l'équipement client à destination de l'équipement serveur;
- Obtention d'un état courant par recherche dans une table de connexion d'une entrée associant ledit état courant aux dites informations d'identification de la connexion;
- Mise à jour de l'état courant de la connexion à partir de ladite au moins une information représentative d'un événement de connexion, extraites du message de requête, d'une table de connexion et d'un automate à états du protocole de transport;
- Envoi audit équipement de commutation d'un message de réponse comprenant :
   ∘ des deuxièmes règles de traitement d'un paquet de données de la connexion, une dite deuxième règle étant associée à une transition possible depuis l'état courant mis à jour et comprenant les informations d'identification de la connexion, au moins une information représentative d'un événement de connexion et une information représentative d'une action à déclencher pour traiter ledit paquet de données; et
   ∘ une commande de suppression des premières règles de traitement, associées aux transitions précédentes de la connexion.

L'invention met en place un système de pare-feu qui exploite le fait que la transition d'un état courant vers un état suivant d'une connexion selon un protocole de transport à état est déclenchée par une ou plusieurs informations représentatives d'un événement de connexion. Le procédé selon l'invention reçoit donc non seulement les informations d'identification de la connexion mais aussi ces informations d'événement de connexion de l'équipement de commutation et les exploite pour obtenir l'état courant, exécuter la machine à états du protocole de transport, identifier le nouvel état courant de la connexion ainsi que toutes les transitions possibles depuis cet état. Il traduit ensuite ces transitions en deuxièmes règles de traitement des paquets de données, dont il commande l'installation à l'équipement de commutation qui lui a remonté le message de requête. Il commande en outre la suppression des premières règles associées aux transitions précédentes, devenues caduques.

Pour amorcer ce processus d'installation/suppression de règles, l'invention s'appuie en outre sur l'installation préalable d'une première règle initiale pour chaque connexion autorisée par l'administrateur du réseau.

Un avantage est de filtrer les paquets de données reçus avec un événement de connexion représentatif d'une demande d'initialisation de connexion au niveau de l'équipement de commutation, de façon à ne laisser passer que les demandes d'initialisation de connexion préalablement autorisées par l'administrateur du réseau. La connexion est identifiée par les premières informations de connexion, qui sont par exemple l'adresse IP source, l'adresse IP destination et le port destination. Ainsi, l'équipement de commutation endosse au moins une partie de la charge de vérifier la légitimité des connexions, ce qui permet de limiter le trafic induit par le firewall entre l'équipement de commutation et l'équipement de contrôle.

De cette manière, l'équipement de commutation ne dispose à un instant courant que de règles de traitement adaptées aux transitions susceptibles de se produire à partir de l'état courant de la connexion, sans pour autant avoir à gérer cette information d'état courant à son niveau.

L'invention propose ainsi une approche tout-à-fait nouvelle et inventive de la protection d'un réseau de communication, qui exécute l'automate à états de la connexion entre l'équipement source et l'équipement destination, sans modifier le principe de fonctionnement de l'équipement de commutation, qui reste basé sur l'exécution des règles imposées par l'équipement de contrôle.

Contrairement à l'art antérieur qui impose à l'équipement de commutation de maintenir dans ses tables les informations d'état courant et d'état suivant et d'appliquer des règles de traitement associant une action de traitement du paquet aux valeurs d'état courant et d'état suivant de la connexion, l'invention propose une solution de protection d'un réseau, pilotée par l'équipement de contrôle, qui ne complexifie pas le fonctionnement de l'équipement de commutation et respecte le principe de séparation du plan de contrôle et du plan de données d'un réseau de type SDN.

Par exemple, l'information d'événement de connexion comprend la valeur d'un ou plusieurs attributs de connexion, désignant une requête d'établissement de connexion ou le fait d'accuser réception d'une requête. Il peut s'agir aussi d'un numéro de séquence ou encore d'un numéro d'accusé-réception.

Ces informations sont transmises au pare-feu par l'équipement de commutation dans un message de requête, qui peut ou non encapsuler le paquet de données reçu. Avantageusement ce message est conforme aux spécifications de la norme Openflow.

Selon un aspect de l'invention, ladite au moins une règle initiale comprend en outre une action de transmission du paquet de données à l'équipement destinataire.

L'équipement de commutation duplique le paquet de données et le transmet à la fois à l'équipement de contrôle et à l'équipement destinataire. Un avantage est qu'il peut effectuer ces deux retransmissions en parallèle, ce qui permet d'éviter d'introduire un retard d'acheminement du paquet de données dû au temps d'aller-retour entre l'équipement de commutation et l'équipement de contrôle.

Avantageusement, l'étape de mise à jour de l'état courant de connexion comprend les sous-étapes suivantes :
- identification d'une transition parmi les transitions possibles depuis l'état courant à partir de ladite au moins une information représentative d'un événement de connexion, extraite du message et par application de l'automate à états du protocole;
- Remplacement de l'état courant par l'état suivant dans l'entrée de la table de connexion.

L'information d'événement de connexion permet d'identifier la transition possible depuis l'état courant de la connexion, telle que définie par la machine à états du protocole de transport. Une fois la transition décidée, l'entrée de la table relative à la connexion considérée est mise à jour avec le nouvel état courant.

Selon un aspect de l'invention, une règle de traitement associée à une transition d'un état courant vers un état suivant comprend une action de retransmission du paquet de données vers l'équipement de contrôle.

Ainsi, le pare-feu peut exécuter la machine à états du protocole de transport de façon synchronisée avec les équipements client et serveur et actualiser les règles de traitement en conséquence.

Avantageusement, le message de réponse comprend en outre une règle de traitement associée à un événement de connexion dans l'état courant, la dite règle comprenant une action de traitement du paquet de données appartenant au groupe comprenant :
- la transmission du paquet de données à l'équipement serveur ;
- la transmission d'au moins une information contenue dans ce paquet à l'équipement de contrôle ;
- le rejet du paquet de données.

Cette règle n'est pas associée à une transition vers un état suivant. Elle permet de traiter les paquets de données dans un état courant particulier de la connexion, tel que par exemple l'état de connexion établie, pour lequel un paquet de données émis par l'équipement client et comprenant une information de connexion représentative d'un acquittement reçu est transmis directement à l'équipement serveur. Une telle règle correspond donc à un événement de connexion qui n'est a priori pas déclencheur de transition.

De cette manière, le pare-feu ne reçoit que les paquets de données porteurs d'événements de connexion déclencheurs d'une transition vers un état suivant de la machine à état du protocole de communication. Les autres sont traités localement par l'équipement de commutation qui applique la règle de traitement associée à la transition concernée et identifiée à partir de la ou des informations d'événements de connexion contenues dans le paquet de données. Dans certains cas, des informations peuvent être remontées dans un message de notification au pare-feu de façon à ce qu'il mette en oeuvre des traitements supplémentaires, par exemple destinés à vérifier la légitimité d'un paquet de données.

De façon alternative, le pare-feu selon l'invention peut aussi installer une règle initiale universelle comportant des informations d'identification de connexion ayant des valeurs quelconques, une information représentative d'un événement d'initialisation de connexion et une action de retransmission du paquet de données à l'équipement de contrôle. Dans ce cas, au contraire, l'équipement de contrôle est assuré de recevoir toutes les demandes d'initialisation de connexion et de contrôler la vérification de la légitimité de toutes les connexions.

Selon un autre aspect de l'invention, lesdites règles étant associées à un niveau de priorité prédéterminé, ledit procédé comprend en outre une étape préalable de transmission à l'équipement de commutation d'une règle universelle de traitement d'un paquet de données, associée à un niveau de priorité inférieur à celui des premières et deuxièmes règles, ladite règle universelle définissant une action de rejet du paquet de données quelles que soient les valeurs des informations de connexion et de l'information représentative d'un événement de connexion contenues dans le paquet de données.

Avec l'invention, si aucune règle de traitement de priorité supérieure ne s'applique, la règle universelle prend le relais et rejette le paquet. Ainsi, un paquet de données ne correspondant à aucune connexion autorisée par l'administrateur du réseau, ni à aucune transition prévue par le firewall est directement rejeté sans être remonté au firewall et sans engendrer de trafic inutile entre l'équipement de commutation et le contrôleur.

On comprend que de cette manière, la connexion est a priori fermée au trafic de données et s'ouvre en fonction de l'évolution de la machine à états de la connexion.

On comprend, que, combinée avec la première règle initiale de traitement des connexions entre l'équipement client et l'équipement serveur, cette règle universelle de rejet permet de libérer l'équipement de contrôle de la charge de vérifier la légitimité de la connexion. Un avantage est de limiter le trafic entre l'équipement de commutation et l'équipement de contrôle.

Selon encore un autre aspect de l'invention, une dite règle de traitement associée à une transition possible d'un état courant vers un état suivant comprend en outre une information relative à une période de validité de la règle et, sur réception d'un message de requête comprenant au moins les informations d'identification de la connexion et une information représentative d'un événement de connexion comprenant une notification d'expiration de la période de validité, le procédé déclenche les étapes de mise à jour de l'état courant de connexion et d'envoi audit équipement de commutation d'un message de réponse.

A l'issue de cette période de validité, si aucun paquet de données reçu n'a validé les préconditions de cette règle, l'équipement de commutation supprime la règle de traitement de sa table, en notifie l'équipement de contrôle par l'intermédiaire un message de requête de protection particulier, selon lequel la notification d'expiration de période de validité est transmise comme un événement de connexion. La réception de ce message de requête déclenche la mise en oeuvre des étapes de l'invention pour mettre à jour l'état courant, identifier les nouvelles transitions et envoyer les nouvelles règles de traitement associées à ces transitions.

L'invention s'appuie en effet sur le fait que, selon le protocole de communication considéré, l'expiration de la période constitue un événement déclencheur de transition de l'automate à états. Par exemple, dans l'état de communication établie, l'absence de d'émission de paquet de données par l'équipement source vers l'équipement destination pendant une période de validité prédéterminée conduit à un basculement vers un état de fin de connexion.

La norme Openflow prévoit en effet un champ idle time out pour définir une telle période et notifier l'équipement de commutation de son expiration. Un avantage de l'invention est de prendre en compte cette période de validité d'un état de connexion prévu par le protocole de communication, en l'intégrant dans une règle de traitement, ce qui permet à l'équipement de commutation de contribuer à la mise en oeuvre de la machine à états du protocole de communication tout en gardant un fonctionnement normatif.

Selon encore un autre aspect de l'invention, une dite règle de traitement comprend en outre des informations d'identification d'informations représentatives d'un numéro de séquence d'un paquet de données émis par l'équipement source et en ce que, sur réception d'un message de requête de protection comprenant au moins lesdites informations d'identification de la connexion, les valeurs des informations représentatives du numéro de séquence identifiées, le procédé comprend une étape de vérification de légitimité des valeurs représentatives de ces numéros reçues par comparaison à des valeurs précédemment stockées.

Un avantage de ce mode de réalisation est de permettre la vérification dynamique de la légitimité d'un paquet de données, basée sur des informations dont les valeurs changent au cours de la connexion ; comme par exemple pour le protocole TCP.

Avantageusement, les informations d'identifications d'informations représentatives des numéros de séquence sont insérées dans un champ « Expérimenter» de la règle de traitement prévu par la norme OpenFlow. Conformément à cette norme l'équipement de commutation, sur réception d'un paquet de données de la connexion l'équipement de commutation en extrait les valeurs des champs identifiés et les transmet au firewall.

L'invention tire parti de ce fonctionnement et exploite les informations extraites pour vérifier la légitimité du paquet de données au niveau du firewall.

Par exemple, les informations représentatives du numéro de séquence du paquet de données comprennent le numéro de séquence, une taille de fenêtre de valeurs autorisées et le numéro d'accus é-réception du paquet de données précédemment envoyé par l'équipement source.

Selon une variante, la règle de traitement comprend en outre des informations d'identification d'informations représentatives d'un champ de valeur fixe d'un paquet de données émis par l'équipement client. Par exemple, il s'agit du champ « Initiation Tag » tel que spécifié par le protocole SCTP. Le procédé selon l'invention ajoute la valeur de ce champ aux informations de correspondance des règles de traitement générées par l'équipement de contrôle et installées dans l'équipement de commutation. La vérification de la légitimité des valeurs représentatives de ces numéros se fait alors au niveau de l'équipement de commutation. Un avantage de ce mode de réalisation est de ne pas accroître le trafic entre l'équipement de commutation et l'équipement de contrôle et donc de faciliter un passage à l'échelle ?

Le procédé qui vient d'être décrit dans ses différents modes de réalisation est avantageusement mis en oeuvre par un dispositif de protection d'un réseau de communication par l'intermédiaire duquel un équipement de communication client est apte à établir une connexion à états selon un protocole de transport à états avec un équipement de communication serveur, et à lui transmettre des paquets de données , ledit dispositif étant caractérisé en ce qu'il comprend les unités suivantes :
- Réception d'un message de requête), ledit message comprenant au moins des informations d'identification de la connexion et d'au moins une information (IE) représentative d'un événement de connexion, ledit message ayant été envoyé par un équipement de commutation du réseau, par application d'une première règle de traitement d'un paquet de données émis par l'équipement client à destination de l'équipement serveur
- Obtention d'un état courant par recherche dans une table de connexion d'une entrée associant ledit état courant aux dites informations d'identification de la connexion;
- Mise à jour de l'état courant de la connexion à partir de ladite au moins une information représentative d'un événement de connexion, extraites du message de requête et d'un automate à états du protocole de transport;
- Envoi audit équipement de commutation d'un message de réponse comprenant :
   ∘ des deuxièmes règles de traitement d'un paquet de données de la connexion, une dite deuxième règle étant associée à une transition possible depuis l'état courant mis à jour et comprenant les informations d'identification de la connexion, au moins une information représentative d'un événement de connexion et une information représentative d'une action à déclencher pour traiter ledit paquet de données; et
   ∘ une commande de suppression des premières règles de traitement, associées aux transitions précédentes de la connexion.

Corrélativement, l'invention concerne aussi un équipement de contrôle d'un équipement de commutation d'un réseau de communication, comprenant un tel dispositif.

Selon une variante, ce dispositif de protection peut être intégré à un module de protection indépendant, connecté à l'équipement de contrôle.

L'invention concerne aussi un réseau de communication comprenant un équipement de contrôle selon l'invention.

L'invention concerne encore un programme d'ordinateur comportant des instructions pour la mise en oeuvre des étapes d'un procédé tel que décrit précédemment, lorsque ce programme est exécuté par un processeur.

Ces programmes peuvent utiliser n'importe quel langage de programmation. Ils peuvent être téléchargés depuis un réseau de communication et/ou enregistrés sur un support lisible par ordinateur.

L'invention se rapporte enfin à un support d'enregistrement, lisible par un processeur, intégré ou non au dispositif de protection d'un réseau de communication selon l'invention, éventuellement amovible, mémorisant respectivement un programme d'ordinateur mettant en oeuvre un procédé de protection d'un réseau de communication tel que décrits précédemment.

### 6. Liste des figures

D'autres avantages et caractéristiques de l'invention apparaîtront plus clairement à la lecture de la description suivante d'un mode de réalisation particulier de l'invention, donné à titre de simple exemple illustratif et non limitatif, et des dessins annexés, parmi lesquels :
- la Figure **1** présente de façon schématique un équipement client connecté à un équipement serveur par l'intermédiaire d'un réseau de communication présentant une architecture de type SDN;
- les Figures **2A** et **2B** présentent de façon schématique les tables de règles de traitement mises en oeuvre dans un équipement de commutation selon l'art antérieur ;
- la Figure **3** présente de façon schématique des exemples de transitions entre un état courant et un état suivant d'une connexion définie par un protocole de transport à états selon l'invention ;
- la Figure **4** présente de façon schématique les étapes d'un procédé de protection d'un réseau de communication selon l'invention ;
- la Figure **5** détaille l'étape de mise à jour de l'état courant de la connexion selon l'invention ;
- la Figure **6** illustre un exemple de règle de traitement mise en oeuvre par le procédé selon l'invention ;
- la Figure **7A** détaille l'étape d'installation d'une règle initiale par le procédé selon un exemple de réalisation de l'invention ;
- la Figure **7B** illustre un exemple d'entrée de la table de connexion mise en oeuvre par le procédé selon l'invention ;
- la Figure **7C** illustre un exemple de règle initiale universelle selon un exemple de réalisation de l'invention ;
- la Figure **7D** illustre un exemple de règle initiale associée à au moins une connexion entre un équipement client et un équipement serveur selon un exemple de réalisation de l'invention ;
- la Figure **8A** illustre un ensemble de règles de traitement installées par le procédé selon un exemple de réalisation de l'invention ;
- la Figure **9A** illustre un exemple de règle de traitement comprenant une période de validité selon un exemple de réalisation de l'invention ;
- la Figure **9B** détaille les étapes mises en oeuvre par le procédé selon un troisième mode de réalisation de l'invention suite à l'expiration de la période de validité de ladite règle ;
- la Figure **10A** illustre un exemple de règle de traitement statique selon un exemple de réalisation de l'invention ;
- la Figure **10B** décrit les étapes mises en oeuvre par le procédé selon l'invention pour répondre à une attaque de type « forgeage » selon un exemple de réalisation de l'invention ;
- la Figure **10C** illustre un exemple de règle de traitement dynamique mise en oeuvre un exemple de réalisation de l'invention ;
- la Figure **11** présente de façon schématique et simplifiée les états d'un pare-feu mis en oeuvre par le procédé de protection d'un réseau de communication selon l'invention, pour le protocole de transport TCP ; et
-- la Figure **12** illustre de façon schématique un exemple de structure matérielle d'un dispositif de protection d'un réseau de communication selon l'invention.

### 7. Description d'un mode de réalisation particulier de l'invention

Le principe général de l'invention repose sur un pare-feu adapté à une architecture de type SDN et apte à prendre en compte la machine à états du protocole de transport de données mis en oeuvre par la connexion entre un équipement client et un équipement serveur et de l'ensemble des transitions possibles de l'état courant de la connexion vers des états suivants ou des actions entreprises dans l'état courant pour installer des règles de traitement des paquets de données correspondant à ces transitions ou à ces actions dans l'équipement de commutation en charge de cette connexion et désinstaller les règles précédentes si elles sont devenues obsolètes.

Dans la suite de la description, on considère un réseau de télécommunications organisé selon une architecture SDN tel que celui présenté en relation avec la Figure **1**. On suppose en outre que les équipements client EC et serveur ES sont aptes à communiquer en mode connecté selon un protocole de transport à états. Le client est l'équipement qui initie la connexion. Un tel protocole est mis en oeuvre par la couche Transport du modèle OSI (pour « Open System Interconnection », en anglais) et prévoit trois phases de connexion, chaque phase comprenant un ou plusieurs états:
- une phase d'établissement de connexion, qui comprend un échange d'au moins trois messages entre l'équipement client et l'équipement serveur, en fonction du protocole utilisé. Par exemple le protocole TCP utilise un établissement de connexion à trois messages, alors que le protocole SCTP (pour « Stream Control Transmission Protocol », en anglais) a besoin de quatre messages. La phase d'établissement de connexion est initiée par un message de requête d'initiation de connexion émis par le client. La connexion passe dans l'état « connexion initiée ». La connexion évolue vers un état « attente d'un message d'acquittement d'initiation ».Le serveur confirme cette initiation de connexion avec un message d'acquittement d'initiation de connexion. Ce message d'acquittement peut ou non contenir des informations, selon le protocole utilisé, pour négocier des paramètres de connexion. La connexion entre dans un état « acquittement d'initiation reçu ». Un message de confirmation de connexion est ensuite envoyé par le client à destination du serveur. Ce message de confirmation de connexion peut ou non contenir des informations, selon le protocole utilisé, permettant de négocier des paramètres de connexion. Lorsque le protocole utilise un établissement de connexion à 4 messages, un message d'acquittement de confirmation de connexion est envoyé par le serveur au client. Au terme de ces messages, la connexion est correctement initialisée, et le protocole entre dans une phase de transfert de données ;
- une phase de transfert de données, correspondant à un état de « connexion établie », durant laquelle des messages sont transmis d'un équipement à l'autre pour échanger des données, ainsi que des messages d'acquittement des données reçues ; Ces deux messages peuvent être combinés suivant le protocole utilisé. Enfin, durant la phase de transfert, le client ou le serveur peut émettre un message d'interruption inopiné de la connexion lorsqu'il détecte un problème qui ne peut pas être résolu. L'un comme l'autre peut aussi émettre un message de terminaison de connexion. Le message de terminaison de connexion est généralement suivi d'un message d'acquittement de terminaison de connexion. Suivant le protocole utilisé, des messages réciproques de terminaison de connexion peuvent être envoyés par les équipements client et serveur afin que la terminaison de connexion soit explicitement dictée par les deux entités ;et
- une phase de libération de connexion, déclenchée par un message d'interruption inopinée de la connexion, par exemple de type « RESET » selon le protocole TCP, émis par un des deux équipements lorsqu'il détecte un problème ou un message de requête de terminaison de connexion, par exemple de type « FIN » selon le protocole TCP , émis par un des deux équipements. Ce dernier peut être suivi, selon le protocole, d'un message d'acquittement de terminaison de connexion. Suivant le protocole utilisé, des messages réciproques de terminaison de connexion peuvent être envoyés par les équipements client et serveur. La connexion passe dans un état de « fin de connexion ».

On comprend que selon un tel protocole de transport, une connexion passe d'un état courant à un état suivant en fonction d'événements qui surviennent au cours de la connexion. Un événement prédéterminé déclenche une transition de l'état courant vers un état suivant, comme défini par la machine à états du protocole considéré.

En relation avec la Figure **3****,** on a représenté un état courant Si de la connexion entre l'équipement client et l'équipement serveur, tel qu'il est vu par le pare-feu selon l'invention, conformément à la machine d'états du protocole de transport considéré. Depuis cet état courant, le pare-feu considère deux transitions possibles Ti,i, Ti,j vers les états Si et Sj.

Considérons à titre d'exemple que l'état courant Si correspond à l'état « attente d'un message d'acquittement d'initiation ». L'état précédent Sh correspondait à un état d'écoute, dans l'attente d'envoi ou de réception d'un message d'initiation de connexion. L'état suivant Sj correspond à l'état « message d'acquittement d'initialisation reçu » et l'état Sk à l'état « connexion établie ».

La transition Tij vers l'état Sj est déclenchée par un événement de réception d'un message d'acquittement d'initiation de connexion par l'équipement serveur. Une information IE2 représentative d'un tel événement est par exemple un attribut de connexion (pour « flag », en anglais) qui permet d'identifier le message comme un message d'acquittement. Selon le protocole TCP, cet attribut de connexion correspond à Ack =1.

La transition Tih vers un état Sh précédent peut être déclenchée par un événement de connexion prédéterminé. L'information IE3 peut être un attribut de connexion qui ne permet pas d'identifier le message comme un message d'acquittement de la requête d'initialisation précédemment reçue ou bien une autre information liée à la connexion comprenant une valeur non conforme, telle qu'un numéro de séquence par exemple.

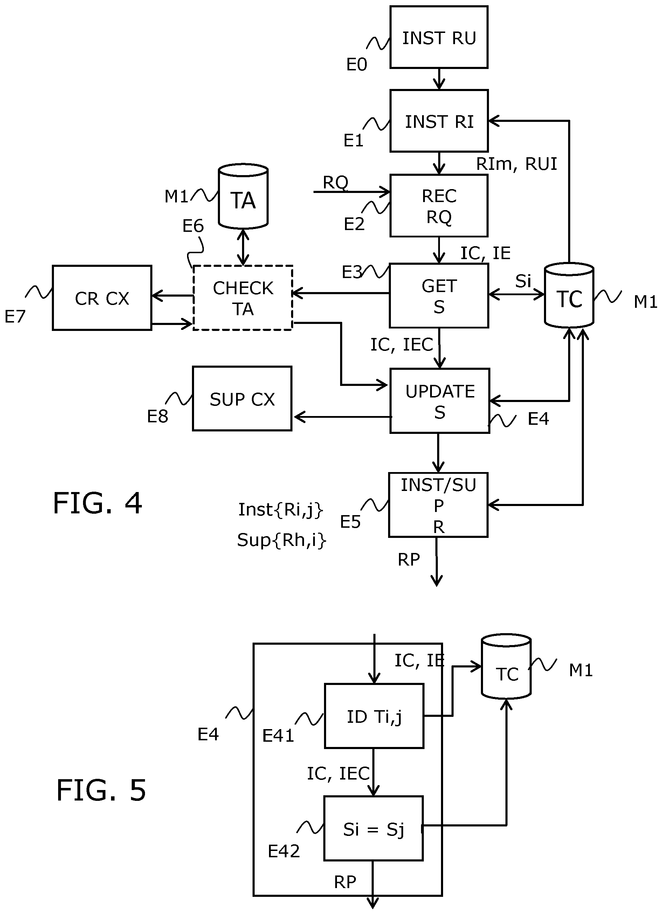

En relation avec la Figure **4****,** on présente les étapes d'un procédé de protection d'un tel réseau de communication selon un mode de réalisation de l'invention.

Un tel procédé est avantageusement mis en oeuvre par un dispositif de protection d'un réseau de communication ou pare-feu PF 100 qui peut être intégré à l'équipement de contrôle 10 ou bien faire l'objet d'un module indépendant connecté à l'équipement 10.

Au cours d'une étape E2, un message de requête de traitement RQ est reçu par l'équipement de contrôle 10 en provenance de l'équipement de commutation 20. Dans la suite de la description, on considère avantageusement qu'il est reçu via une interface de communication avec l'équipement de commutation 20, telle que l'interface IOF. L'équipement de contrôle 10 le retransmet au dispositif de pare-feu 100.

Le message RQ comprend au moins des informations d'identification de la connexion et au moins une information représentative d'un événement de connexion. Par exemple les informations d'identification de la connexion IC comprennent au moins l'adresse IP de l'équipement client @IPC, l'adresse IP de l'équipement serveur @IPS et un port de l'équipement serveur PS. Lorsque la connexion est déjà initiée, elles comprennent en outre un port PC de l'équipement client.

Comme précédemment évoqué, l'information représentative d'un événement de connexion IE comprend une information relative à la connexion, telle qu'un attribut de connexion ou tout autre champ, pourvu que cette information soit associée dans la machine à état du protocole de transport, à une transition de la connexion d'un état courant vers un état suivant.

Le message RQ peut être de types variés. Il peut par exemple encapsuler un paquet de données reçu de l'équipement de commutation 20 en provenance de l'équipement client et à destination de l'équipement serveur. Selon la norme OpenFlow, il s'agit alors d'un message de type « Packet-In ». Il peut s'agir aussi d'un message de notification NOT produit par l'équipement de commutation 20 en réponse à une situation particulière, telle que l'expiration d'une période de validité. Ce dernier exemple sera décrit plus en détails ci-après.

Le procédé de protection selon l'invention met ensuite en oeuvre une étape E3 d'obtention d'un état courant Si de la connexion. Elle est réalisée à l'aide des informations d'identification de connexion IC contenues dans le message RQ. Avantageusement, le procédé recherche dans une table de connexion TC stockée en mémoire, s'il existe une entrée correspondant à ces informations d'identification et leur associant un état courant Si de la connexion. Si c'est le cas, il passe à l'étape E4, sinon deux cas sont possibles :
- Selon un premier mode de réalisation de l'invention, il vérifie en E6 que la connexion identifiée est légitime, c'est-à-dire a priori autorisée par un administrateur du réseau, et, si le résultat est positif, il crée une nouvelle entrée dans sa table de connexions TC au cours d'une étape E7, en instanciant l'état courant à « Connexion initiée ».. Si le résultat de la vérification est négatif, il rejette le paquet de données ; Il passe ensuite à l'étape E4 de mise à jour de l'état courant;
- Selon un deuxième mode de réalisation de l'invention, la vérification de légitimité a déjà été réalisée par l'équipement de commutation 20, à partir d'une règle de traitement initiale, qui sera décrite plus en détails ci-après. Il en résulte que la connexion identifiée est nécessairement autorisée par l'administrateur du réseau. Par conséquent, le procédé passe directement à l'étape E7 de recherche d'une entrée dans sa table TC et, s'il n'en trouve pas, il en crée une, puis passe à l'étape E4 de mise à jour de l'état courant Si.

Cette étape E4 va maintenant être détaillée selon en relation avec la Figure **5****.** Au cours d'une sous-étape E41, le procédé exécute la machine à états du protocole de transport et recherche une transition Tij depuis l'état courant Si extrait qui soit associée à l'information IE représentative d'un événement de connexion.
- Si une transition Tij associée à l'événement de connexion a été identifiée, l'état courant Si est mis à jour et remplacé par l'état suivant Sj ;
- Si aucune transition n'a pu être identifiée, la requête est rejetée. Si le message RQ encapsulait un paquet de données, ce dernier est rejeté et ne sera pas transmis à l'équipement serveur.

Dans la suite, on suppose qu'une transition Tij a été identifiée. Au cours d'une étape E42, le procédé détermine les transitions possibles depuis le nouvel état courant Si = Sj à partir de la machine à état et détermine les règles de traitement associées ces nouvelles transitions Tjk.

On notera que selon l'état courant Si et le protocole de transport considéré, le pare-feu peut être amené à définir une ou plusieurs règles de traitement d'un paquet de données comprenant une information représentative d'un événement de connexion qui n'entraîne pas de transition vers un autre état. C'est le cas par exemple de l'état de « connexion établie ». Un événement de connexion du type « Accusé-réception reçu » n'entraîne pas de changement d'état, mais déclenche l'exécution d'une règle de traitement comprenant une action de retransmission du paquet à l'équipement destinataire.

Avantageusement, les règles associées à ces transitions Tjk ont préalablement été stockées dans une mémoire M1.

Au cours d'une étape E4, le procédé commande ensuite :
- l'installation dans l'équipement de commutation 20 des nouvelles règles Rjk de traitement déterminées. Cette commande est réalisée par l'envoi d'un message RP de réponse à la requête RQ comprenant les nouvelles règles de traitement ;
- la suppression des règles précédentes si nécessaire. Avantageusement, le message RP comprend une commande de suppression de ces règles précédentes. On notera que par règles précédentes, on désigne toutes les règles devenues obsolètes du fait du changement d'état, c'est-à-dire à la fois les règles de traitement associées aux transitions précédentes et, le cas échéant les règles associées à des événements n'entraînant pas de transition. En outre, la commande de suppression n'est pas forcément destinée à être exécutée immédiatement. On peut avantageusement lui associer des conditions d'application, afin de permettre à certaines actions en cours de se terminer. Par exemple, avant de supprimer les règles de traitement d'un paquet dans l'état de connexion établie, lors d'une transition de fin de connexion, l'équipement de commutation 20 peut être configuré pour attendre un intervalle de temps prédéterminé afin de laisser le temps aux derniers paquets de données d'être retransmis à leur destinataire.

De façon alternative, deux messages distincts peuvent être envoyés à l'équipement de commutation, un premier pour commander l'installation des nouvelles règles et un deuxième pour commander la suppression des précédentes.

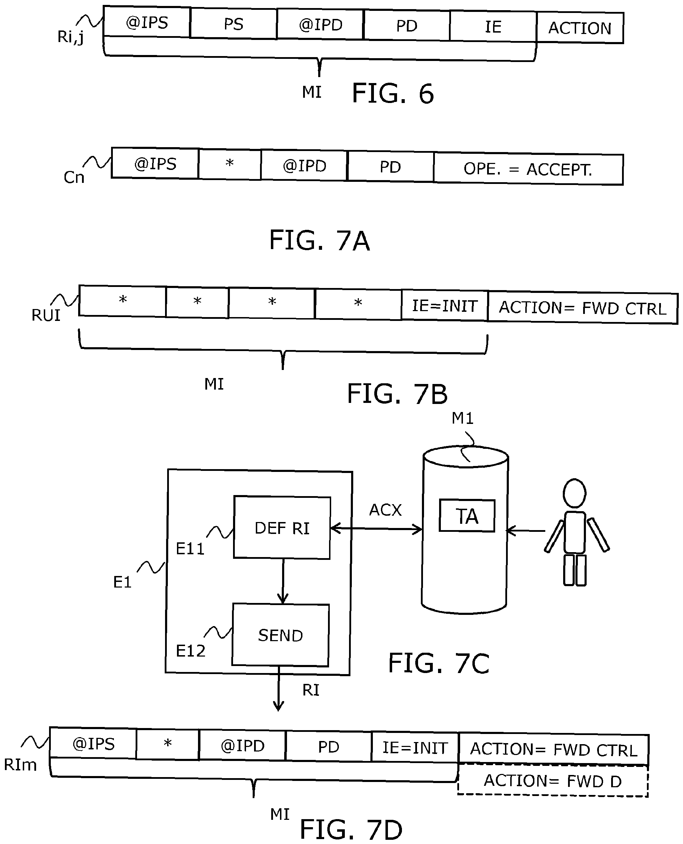

En relation avec la Figure **6****,** on présente un premier exemple de règle de traitement Rij installée par le procédé de protection d'un réseau de communication selon l'invention. La règle de traitement Rij est associée à la transition Tij de l'état courant Si à l'état suivant Sj. Elle comprend des informations de correspondance MI (pour « Matching Information », en anglais) ou préconditions, et une action de traitement associée. L'action de traitement associée peut être de diverses natures telles que la transmission du paquet de données sur un port de sortie de l'équipement de commutation, donc vers l'équipement serveur destinataire, ou la transmission du paquet de données vers l'équipement de contrôle ou encore le rejet du paquet de données. On peut aussi associer plusieurs actions de traitement à une même règle, pourvu qu'elles soient compatibles. Par exemple, on peut ajouter une action de transmission du paquet de données à l'équipement destinataire à une règle Rij comprenant une action de transmission du paquet de données vers l'équipement de contrôle. De cette manière, les deux actions peuvent être menées en parallèle.

Selon l'invention, les informations de correspondance IM comprennent :
- des informations d'identification de la connexion. Il s'agit par exemple de l'adresse IP de l'équipement client @IPC, du port de l'équipement client PC, de l'adresse IP de l'équipement serveur @IPS et du port de l'équipement serveur PS. On notera qu'avant l'initialisation de la connexion, le port de l'équipement client n'est généralement pas déterminé. Il en résulte que les informations d'identification de connexion peuvent se réduire aux trois champs : @IPC, @IPS et PS ;
- une information représentative IE d'un événement de connexion. Avantageusement, il s'agit d'un attribut de connexion défini par le protocole de transport à état, qui déclenche la transition de l'état courant Si à l'état suivant Sj.

Avantageusement, la règle de traitement Rij est conforme aux spécifications de la norme OpenFlow et elle est appliquée par l'équipement de commutation 20 conformément à la norme OpenFlow :
A réception du message RP, l'équipement de commutation 20 ajoute dans sa table de règles TR une entrée pour chaque nouvelle règle et supprime les entrées correspondant aux règles précédentes n'intervenant plus dans le fonctionnement du protocole à état.

A réception d'un paquet de données émis par l'équipement client EC à destination de l'équipement serveur ES, l'équipement de commutation 20 extrait du paquet les informations d'identification de connexion et l'information représentative d'un événement de connexion et recherche dans sa table TR s'il existe une correspondance avec les informations de correspondance IM d'une des règles installées.

Si c'est le cas, il exécute l'action de traitement associée.

On comprend que pour une connexion particulière, on attend un événement de connexion prédéterminé associé à une transition particulière ou un événement lié au traitement de l'état courant pour déclencher l'action de traitement prévue par la règle.

De cette manière, avec l'invention, l'équipement de commutation 20 dispose de règles de traitement adaptées à l'état courant de la connexion et définissant les actions à entreprendre dans cet état courant et aux transitions prévues par la machine à état du protocole de transport depuis cet état courant.

On comprend en outre qu'avec l'invention, les étapes du procédé de protection qui viennent d'être présentées en relation avec la Figure **4** sont répétées à chaque nouveau message de requête RQ reçu de l'équipement de commutation.

Bien sûr, un tel fonctionnement nécessite l'installation de premières règles, dites « initiales », préalablement à la première mise en oeuvre du procédé de protection selon l'invention. De telles règles définissent le traitement à appliquer à un paquet de données comprenant une demande d'initiation de connexion.

Le cas particulier de l'initialisation d'une connexion va maintenant être détaillé, en relation avec les Figures **7A** à **7D****.**

De façon connue, un administrateur du réseau autorise au préalable certains équipements de communication à établir entre eux des connexions. Pour ce faire, il renseigne une table de connexions TA de l'équipement de contrôle 10, stockée par exemple dans la mémoire M1 de l'équipement de contrôle 10.

En relation avec la Figure **7A****,** une entrée Cn de cette table TA comprend au moins des informations d'identification de la connexion et une opération, qui peut être « autoriser » (ACCEPT.) ou « refuser » (DENY).

On considère le cas d'un paquet de données reçu par l'équipement de commutation 20 et comprenant une information représentative d'une demande d'initialisation de connexion. En relation avec la Figure **4****,** on considère une étape E1 d'installation d'au moins une première règle ou règle initiale. Deux modes de réalisation de l'invention sont envisagés :
- selon un premier mode de réalisation déjà évoqué, le procédé comprend une étape E1 préalable d'installation dans l'équipement de commutation 20 d'une première règle, dite initiale, qui permet le renvoi de n'importe quelle demande d'initialisation de connexion vers l'équipement de contrôle 10, de telle sorte que la charge de vérifier la légitimité de la connexion lui incombe (étape E6) Un exemple d'une telle règle est présenté en relation avec la Figure **7B****.** Il s'agit d'une règle universelle RUI car les informations d'identification de connexion peuvent prendre des valeurs quelconques. Cette règle comprend en outre une information IE=INIT représentative d'une demande d'initialisation de connexion. Par exemple, selon le protocole TCP, il s'agit de l'attribut de connexion Syn=1. L'action de traitement associée consiste à retransmettre le paquet de données à l'équipement de contrôle.
   L'avantage de ce mode de réalisation est qu'il requiert l'utilisation d'une seule entrée de la table de règles de l'équipement de commutation 20. Le nombre d'entrées de cette table est un facteur important à considérer et à limiter. En effet, le temps de traitement de chaque paquet de données sera d'autant plus long que la table de règles comprend plus d'entrées.
- Selon un deuxième mode de réalisation, l'étape E1 comprend l'installation d'une première règle initiale RIm par connexion autorisée Cm, avec m entier. En relation avec la Figure **7C****,** l'étape E1 comprend une sous-étape E11 d'obtention des informations renseignées par l'administrateur, c'est-à-dire les entrées de la table de connexions TA. En E12 les informations de ces entrées sont traduites en règles de traitement initiales RIm, qui sont transmises en E13 à l'équipement de commutation 20.
   Un exemple de règle RIm est présenté en relation avec la Figure **7D****.** Elle concerne une connexion préalablement autorisée par l'administrateur du réseau. Cette règle comprend des informations d'identification de la connexion Cm, par exemple au moins l'adresse IP de l'équipement client @IPC, l'adresse IP de l'équipement serveur @IPS et le port PS de l'équipement serveur et une information IE=INIT représentative d'une demande d'initialisation de connexion. Par exemple, selon le protocole de transport TCP, il s'agit de l'attribut de connexion Syn =1. L'action de traitement associée traduit l'opération «AUTORISER» renseignée par l'administrateur et consiste à retransmettre le paquet de données à l'équipement de contrôle. Optionnellement, une deuxième action de retransmission à l'équipement destinataire peut être ajoutée.
   Un premier avantage de ce deuxième mode de fonctionnement est de limiter le trafic entre l'équipement de commutation 20 et l'équipement de contrôle 10 et de ce fait de réduire les possibilités d'une attaque par déni de service sur l'équipement de contrôle 10 aux informations de connexions acceptées par l'administrateur. Dans des réseaux fortement contraints d'un point de vue sécurité, un tel mode peut être privilégié tout en sacrifiant un nombre d'entrées de la table de règles des équipements de commutation. Le nombre d'entrées sacrifiées dans la table de commutation est égal au nombre de connexions autorisées par l'administrateur.
   De façon optionnelle, la règle RIm comprend une deuxième action de traitement associée, qui consiste à transmettre le paquet de données à l'équipement destinataire. Cette deuxième action peut avantageusement être réalisée en parallèle de la première, ce qui présente l'avantage d'éviter l'introduction d'un retard dans l'acheminement du paquet de données dû au temps d'aller-retour entre l'équipement de commutation et l'équipement de contrôle. Du fait que la connexion Cm a été préalablement autorisée par l'administrateur, cette variante ne met pas en péril la sécurité du réseau de communication.

L'administrateur devra donc choisir entre ces deux modes. Si le passage à l'échelle de la solution est privilégié, le premier mode est le plus pertinent. Si l'aspect sécurité est primordial, le deuxième mode est le plus pertinent.

On comprend que l'étape E1 d'installation de règles initiales RUI, RIm est nécessairement mise en oeuvre au moins une fois, à l'installation de l'équipement de commutation 20 dans le réseau N. Avantageusement, selon le deuxième mode de réalisation, elle est répétée régulièrement pour prendre en compte les éventuelles mises à jour de la table TA par l'administrateur du réseau.

On considère maintenant plus particulièrement le cas des connexions interdites par l'administrateur. Avantageusement, cette interdiction se traduit par l'installation d'une règle de traitement adaptée dans l'équipement de commutation 20.

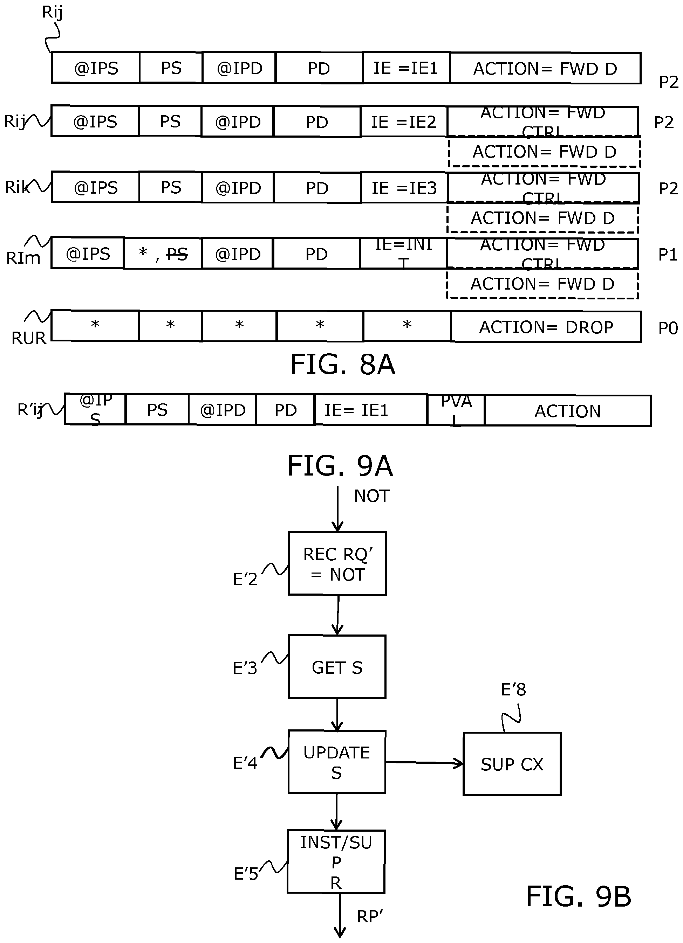

Là encore, deux modes de réalisation de l'invention sont envisagés :
- selon une première option, une règle initiale RIRm, non représentée, est descendue en E1 dans l'équipement de commutation 20, comprenant les informations d'identification de la connexion interdite et une action de rejet du paquet de données, quelle que soit la valeur de l'information représentative IE d'un événement de connexion. Un inconvénient est qu'il faut installer autant de règles que de connexion interdites, alors que la table de règles de l'équipement de commutation 20 est de taille limitée. L'avantage d'un tel mode est qu'il conserve le principe de fonctionnement par défaut du protocole OpenFlow. En effet, les paquets de données n'ayant pas de correspondance dans la table de règles de traitement de l'équipement de commutation 20 seront remontés au contrôleur qui traitera lui-même ces paquets de données, notamment en vérifiant leur légitimité en E6.
- selon une deuxième option, une règle universelle de rejet RUR est installée en E0 dans l'équipement de commutation 20 pour traiter de façon générique l'ensemble des connexions non autorisées par l'administrateur. En relation avec les Figures **4** et **8A****,** le procédé comprend à cet effet une étape E0 préalable d'installation de cette règle de traitement RUR, dite universelle de rejet, dans la table de règles de l'équipement de commutation 20.
   Une telle règle RUR comprend les informations de correspondance suivantes :
   ∘ des informations d'identification de connexion IC pouvant prendre une valeur quelconque (illustré par le symbole * sur la Figure **8A**) ; et
   ∘ une information représentative d'un événement de connexion IE, pouvant prendre une valeur quelconque (illustré par le symbole * sur la Figure **8A**).

   La règle RUR leur associe une action de rejet du paquet de données.
   Ainsi, cette règle de traitement RUR est destinée à rejeter tout paquet de données reçu quelles que soient sa provenance et sa destination. Un premier avantage de cette solution est d'optimiser l'occupation mémoire de l'équipement de commutation 20.
   En outre, selon cette deuxième option, les règles de traitement installées dans la table de règles de l'équipement de commutation 20 sont chacune associées à un niveau de priorité P, déterminant leur ordre de priorité de mise en application par l'équipement de commutation 20.
   Dans ce contexte, la règle universelle RUR est associée à un niveau minimal de priorité P0, par exemple égal à zéro, de telle sorte qu'elle soit mise en application lorsqu'aucune autre règle de traitement plus prioritaire et présente dans la table ne s'applique au paquet de données reçu. On comprend que cette règle RUR vient remplacer le traitement par défaut prévu par la norme OpenFlow, qui consiste à remonter tout paquet de données qui ne satisfait les préconditions d'aucune règle de la table TR.
   Les règles initiales Rim ou RUI qui concernent les requêtes d'initialisation de connexion autorisées par la politique de sécurité du réseau bénéficient d'un niveau de priorité P1 supérieur, par exemple égal à 1.
   Les règles de traitement Rij associées à une transition de l'état courant Si de la connexion à un état suivant ou la règle Rii de traitement de l'état courant en mode connexion établie sont associées à un niveau de priorité P2 encore supérieur, par exemple égal à 2.
   Les règles Rij peuvent comprendre plusieurs actions de traitement, par exemple la transmission du paquet de données à l'équipement de contrôle pour assurer la transition vers l'état suivant et la mise en place des règles associées et la transmission du paquet de données à l'équipement destinataire.
   Ainsi, l'installation de cette règle universelle de rejet RUR de priorité minimale présente un deuxième avantage, qui est de permettre la mise en place d'un fonctionnement par défaut de l'équipement de commutation, basé sur le rejet systématique d'un paquet de données ne satisfaisant les préconditions d'aucune autre règle plus prioritaire. De cette manière, le réseau est a priori fermé, puisqu'il n'autorise aucune connexion. Il n'est ouvert qu'aux requêtes d'initialisation de connexion autorisées par la politique de sécurité pour lesquelles des règles initiales ont été installées. Une fois qu'une connexion autorisée a été activée, des règles de traitement associées aux transitions possibles depuis l'état courant de la connexion sont installées et appliquées en priorité, ce qui permet d'ouvrir les routes vers les états suivants prévus par la machine à états du protocole de transport depuis cet état courant. Ce sont les seules routes possibles, puisque les routes correspondant aux transitions possibles depuis l'état précédent sont fermées par l'annulation des règles de traitement associées aux transitions précédentes.
   L'administrateur devra donc choisir entre ces deux options en fonction des besoins de son réseau. S'il souhaite pouvoir laisser une gestion libre à l'équipement de contrôle 10 des paquets de données n'ayant aucune correspondance dans la table de commutation, il choisira la première option. C'est généralement le cas d'un réseau d'entreprise ou d'opérateur qui souhaite apporter de la souplesse au niveau de la gestion de réseau en laissant le contrôleur décider si un message correspond à un service donné (protocoles de routage, protocole de découverte du voisinage...) ou non. S'il souhaite mettre en avant une sécurité importante de son réseau, la deuxième option sera privilégiée.

Dans la suite de la description, on se place dans le cas du deuxième mode de réalisation de l'invention avec deuxième option. Autrement dit, le pare-feu a installé des règles initiales RIm propres à chaque connexion autorisée et une règle universelle de rejet RUR.

Dans ce contexte, on considère maintenant un paquet de données comprenant une requête d'initialisation de connexion comprenant une information IE représentative d'une initialisation de connexion, l'équipement client EC a renseigné, en plus de l'adresse source @IPC, de l'adresse destination @IPS et du port destination PD, le champ d'information correspondant au numéro de port source PC. A réception de ce message de requête ; l'équipement de commutation 20 applique la règle initiale RIm, dont les préconditions sont satisfaites, retransmet le paquet de données à l'équipement de contrôle, conformément à l'action de traitement définie par la règle RI. Le pare-feu exécute le procédé selon l'invention, en instanciant la connexion initiée dans sa table de connexion et en commandant à l'équipement de commutation 20 l'installation de règles de traitement Tij associées aux transitions possibles depuis le nouvel état courant de « connexion initiée ». Il commande en outre la suppression des règles précédentes devenues obsolètes. En ce qui concerne la règle initiale RIm pour la connexion initiée entre l'équipement client EC et l'équipement serveur ES depuis le port PC, on notera qu'elle désigne génériquement un ensemble de connexion possibles entre EC et ES. Il ne s'agit donc pas de la supprimer complètement, mais de la modifier, afin qu'il ne soit plus possible d'initier une connexion depuis le même port PC de l'équipement client EC. Selon un premier aspect de l'invention présenté en relation avec la Figure **8B****,** on modifie la règle initiale RIm en une règle R'Im qui exclut le port PC des valeurs de ports source autorisées. Selon une variante, la règle initiale RIm comprend autant de règles particulières que de ports clients disponibles. Dans ce cas, le procédé selon l'invention commande à proprement parler la suppression de la table de règles de cette règle particulière correspondant au port PC utilisée dans la connexion qui vient d'être initiée.

Un avantage est de diminuer les attaques de type « Syn Flooding », lesquelles consistent à saturer l'équipement de contrôle sous le nombre de requêtes d'initiation de connexion.

Selon un troisième mode de réalisation de l'invention, on considère que le protocole de transport mis en oeuvre par la connexion entre un équipement client et un équipement serveur peut en outre associer une période de validité à un état courant. Par exemple, cette période de validité définit l'intervalle de temps pendant lequel l'état courant est maintenu en l'absence d'événement de connexion déclencheur d'une transition prévue depuis cet état ou d'une action dans cet état. Il en résulte que les transitions depuis ou les actions de traitement de l'état courant ne sont donc possibles que pendant cet intervalle de temps.

L'invention propose une solution pour prendre en compte cette contrainte supplémentaire. En relation avec la Figure **9A****,** on présente un exemple de règle de traitement R'ij modifiée, comprenant un champ supplémentaire destiné à renseigner la valeur de la période PVAL de validité associée à la règle. Il ne s'agit donc pas d'une information de correspondance, mais d'un champ supplémentaire destiné à être pris en compte par l'équipement de commutation 20 comme une condition a postériori (« post-condition », en anglais) d'exécution de la règle de traitement considérée.

On notera que ce champ supplémentaire est déjà prévu par la norme OpenFlow et qu'en conséquence, un équipement de commutation conforme à la norme OpenFlow est déjà agencé pour le prendre en compte.

En particulier, dès l'installation de la règle de traitement R'ij dans sa table de règles, l'équipement de commutation 20 déclenche un compteur (« timer », en anglais). Lorsque ce compteur atteint une valeur correspondant à l'expiration de la période de validité PVAL associée à la règle R'ij, l'équipement de commutation 20 la supprime de sa table de règles. Suite à cette suppression, il émet une notification NOT à destination de l'équipement de contrôle 10 pour l'informer de la suppression de cette règle R'ij. Elle comprend les informations de correspondance de la règle, à savoir les informations d'identification de connexion IC et une information représentative d'un événement IE' associé à la transition Tij. Avantageusement, cette information IE' comprend un champ, indiquant le statut supprimé de la règle et un champ indiquant la raison de ce statut, à savoir l'expiration de la période de validité. Par exemple, il s'agit du champ « idle-timeout » selon le protocoleOpenFlow,

En relation avec la Figure **9B****,** on détaille le traitement de cette notification NOT par le procédé de protection selon un troisième mode de réalisation de l'invention. Sur réception de ce message NOT, le procédé extrait en E'2 les informations d'identification IC de la connexion concernée, ce qui lui permet d'identifier en E'3 la connexion concernée et son état courant. En E'4 il identifie la transition Tij concernée, associée à la règle R'ij supprimée. Dans la machine à état du protocole de transport, la période de validité est une condition a posteriori, associée à la transition Tij, qui lorsqu'elle n'est pas vérifiée déclenche une transition vers un état précédent ou suivant, autre que l'état Sj prévu par Tij. Par exemple, selon le protocole TCP, si on considère l'état courant « connexion initiée », le pare-feu bascule dans l'état initial de la machine à état, à savoir l'état d'écoute (pour « listening », en anglais). Si l'état courant est « connexion établie », l'expiration de la période de validité déclenche une transition de type « RESET » vers l'état d'écoute « listening », en passant éventuellement par un état transitoire d'attente d'une deuxième période d'expiration, pour permettre aux paquets en cours de transmission d'atteindre leur destination. Il en résulte qu'au cours d'une étape E'5, le procédé envoie à l'équipement de commutation 20 un message de réponse RP' comprenant une commande d'installation de nouvelles règles et de suppression des précédentes. On comprend, que si le nouvel état courant est un état initial d'écoute, la règle à installer est une règle Rim ou RUI initiale. Comme évoqué précédemment, dans le cas d'une règle initiale Rim, cette installation peut avantageusement consister en une modification des champs d'identification de connexion, le port PC utilisé dans la précédente connexion ne nécessitant plus d'être exclu de la règle RIm générique.

On comprend que le traitement de cette notification NOT par le procédé selon l'invention peut être vu comme celui d'un message de requête RQ' particulier, dans lequel les champs indiquant le statut supprimé de la règle et la raison « idle timeout » de ce statut, sont traités comme une information IE' représentative d'un événement déclencheur d'une transition supplémentaire vers un état précédent ou suivant, par exemple l'état initial d'écoute. Cette transition supplémentaire est particulière en ce qu'elle n'a pas fait l'objet d'une installation de règle de traitement spécifique dans l'équipement de commutation 20 et en ce qu'elle vise à répondre à un incident de connexion. Néanmoins, elle est traitée par le procédé selon l'invention comme toute autre transition prévue par le protocole de transport.

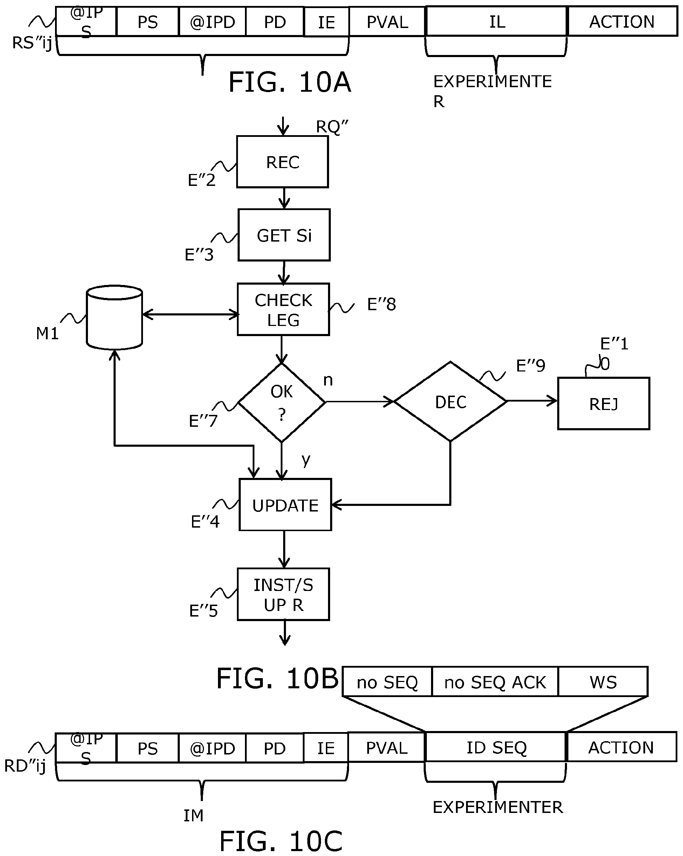

Dans un quatrième mode de réalisation de l'invention, qui va maintenant être présenté en relation avec les Figures **10A** et **10B****,** on considère plus particulièrement une solution de protection à une attaque de type « forgeage » menée par un équipement de commutation malveillant qui émet des paquets de données à la place de l'équipement client légitime. A cet égard, on distingue deux fonctionnements distincts des protocoles de transport pour déceler la légitimité d'un paquet :
- Le premier fonctionnement est statique c'est-à-dire que des informations d'identification sont ajoutées par le client et le serveur durant la phase d'établissement de connexion. Les valeurs de ces informations d'identification ne changent pas durant toute la durée de la connexion. Le protocole SCTP utilise un tel fonctionnement en utilisant un champ de type « Initiation Tag » pour le client et le serveur ;
- Le deuxième fonctionnement est dynamique, c'est-à-dire que les informations d'identification de la légitimité d'un paquet évoluent au cours de la connexion. Par exemple, le protocole TCP, exploite des informations disponibles dans l'en-tête, comme le numéro de séquence du paquet de données.

L'invention propose une solution pour mettre en oeuvre de chacun de ces deux modes de fonctionnement dans un réseau de type SDN.

En relation avec la Figure **10A****,** on présente un exemple de règle de traitement RS "ij mise en oeuvre dans ce quatrième mode de réalisation de l'invention lorsque le protocole de transport requiert une vérification statique de la légitimité. Pour chaque règle générée par l'équipement de contrôle 10, ce dernier ajoute dans ses informations de correspondance ou préconditions, des informations d'identification de légitimité IL, telles que le champ « Initiation Tag ». Les préconditions d'une règle ne seront considérées comme satisfaites, que si les valeurs des informations d'identification de légitimité sont conformes. On notera que l'ajout de ces informations d'identification IL ne remet pas en cause le standard OpenFlow. En effet, le standard OpenFlow permet de modifier la fonction de certains champs, dits « EXPERIMENTER »pour assurer une autre fonction que celle prévue initialement. La vérification de légitimité est donc réalisée par l'équipement de commutation par la simple vérification des préconditions d'une règle de traitement installée dans sa table. Un avantage de ce mode de réalisation statique est qu'il ne nécessite pas la remontée d'informations ou de paquets de données à l'équipement de contrôle. Il ne surcharge donc pas l'équipement de contrôle par rapport au fonctionnement conventionnel d'un pare-feu, ce qui facilite un passage à l'échelle.

En relation avec la Figure **10B****,** on décrit maintenant les étapes du procédé de protection mise en oeuvre dans ce quatrième mode de réalisation de l'invention lorsque le protocole de transport requiert une vérification dynamique de la légitimité. Au cours d'une étape E"2, le procédé reçoit un message de requête RQ", comprenant des informations relatives aux numéros de séquence d'un paquet de données reçu dans le cadre d'une connexion Cm. Ce message de requête comprend en outre des informations IC d'identification de la connexion. Au cours d'une étape E "3, il obtient l'état courant de la connexion à l'aide de sa table de connexions.

Au cours d'une étape E"8, il vérifie la légitimité du paquet de données à l'aide des informations relatives aux numéros de séquences qu'il a extraites. Par exemple, ces informations comprennent trois champs, qui sont le numéro de séquence no SEQ du paquet courant, le numéro de l'accusé-réception courant no SEQ ACK et la taille d'une fenêtre WS de numéros de séquence autorisés. Le pare-feu selon l'invention vérifie que le numéro de séquence du paquet de données courant a une valeur comprise dans une fenêtre de valeurs prédéterminée dont la valeur est stockée en mémoire, à partir du numéro du précédent accusé-réception stocké en mémoire. Il stocke en mémoire le numéro d'accusé-réception courant et la taille de fenêtre courante, qu'il vient de recevoir en vue de la prochaine vérification de légitimité.

En E"9, il décide d'un traitement à appliquer au paquet de données en fonction du résultat de la vérification de légitimité. Si le résultat est positif, il continue à traiter le message de requête comme précédemment décrit, c'est-à-dire qu'il détermine en E"4 si l'état courant de la connexion doit être mis à jour. Au contraire, si le résultat est négatif, le paquet est considéré comme illégitime ou « forgé' », le procédé peut avantageusement décider de son rejet, qu'il met à exécution en E"10.

On notera que selon le message RQ" reçu, la décision de rejet n'est pas exécutée de la même manière :
- Selon un premier aspect, le message de requête RQ" encapsule le paquet de données. Cette situation est amenée à se produire dans les phases d'établissement ou de fin de connexion, c'est-à-dire quand l'équipement de commutation a appliqué une règle de traitement dont l'action consiste à retransmettre le paquet de données à l'équipement de contrôle 10. L'équipement de contrôle 10 extrait lui-même les informations relatives aux numéros de séquence du paquet encapsulé, vérifie en E"8 sa légitimité. En E"10, le paquet de données peut alors être directement rejeté par l'équipement de contrôle. En outre, il met fin à la connexion en E"8, met à jour l'état courant en E"4 en lui donnant la valeur « écoute » et commande en E"5 à l'équipement de commutation 20 la suppression des règles associées aux transitions précédentes, ainsi que la mise à jour de la règle initiale RI ;
- Selon un deuxième aspect, le message de requête RQ" n'encapsule pas le paquet de données. Il s'agit d'un message de notification comprenant au moins les identifiants de la connexion et les valeurs des informations relatives aux numéros de séquence d'un paquet de données reçu par l'équipement de commutation 20. Cette situation est amenée à se produire dans la phase de communication établie, c'est-à-dire quand l'équipement de commutation 20 applique une règle de traitement RD"ii associée à un traitement effectué par l'état courant. Si l'équipement de contrôle 10 décide en E"8 que le paquet de données est illégitime, il commande en E"8 à l'équipement de commutation 10 d'installer une règle de traitement comprenant une action de rejet du paquet de données illégitimes. Il ne modifie pas l'état courant Si. Le pare-feu reste donc dans l'état « connexion établie ».

En relation avec la Figure **10C****,** on a représenté un exemple de règle de traitement dynamique RD"ii mise en oeuvre par le quatrième mode de réalisation de l'invention pendant la phase de connexion établie. Elle comprend un champ supplémentaire, dans lequel sont renseignés des identifiants des informations relatives aux numéros de séquence du paquet de données, par exemple no SEQ, no SEQ ACK et WS. Avantageusement, ce champ supplémentaire est un champ particulier, appelé « Expérimenter », prévu par la norme OpenFlow. L'équipement de commutation 20, s'il est conforme à la norme OpenFlow, est agencé pour lire les identifiants contenus dans ce champ Experimenter, pour extraire du paquet de données les informations correspondant à ces identifiants et les transmettre à l'équipement de contrôle 10 dans un message de requête.

On notera que, pour l'état de connexion établie, plusieurs niveaux de protection contre les attaques dites de forgeage peuvent être prévus :
- un premier niveau selon lequel l'équipement de contrôle vérifie la légitimité des numéros de séquence, mais ne commande pas le rejet du paquet illégitime à l'équipement de contrôle. A la place, il peut transmettre le paquet illégitime à l'équipement serveur qui lui-même le supprimera. En effet, le client comme le serveur vérifient de la même manière la légitimité d'un message et suppriment les messages illégitimes. Un tel fonctionnement, bien que plus simple ajoute une charge supplémentaire au serveur.
- un deuxième niveau, selon lequel l'équipement de contrôle vérifie la légitimité des numéros de séquence comme précédemment décrit et commande le rejet du paquet illégitime à l'équipement de contrôle.

On comprend que la vérification dynamique de la légitimité des paquets de données selon ce mode de réalisation de l'invention assure un haut niveau de sécurité mais qu'elle augmente le trafic entre l'équipement de commutation et l'équipement de contrôle ce qui va à l'encontre du passage à l'échelle de l'invention. Une option est pour l'administrateur du réseau serait d'activer un tel mode seulement pour des connexions requérant un haut niveau de sécurité.

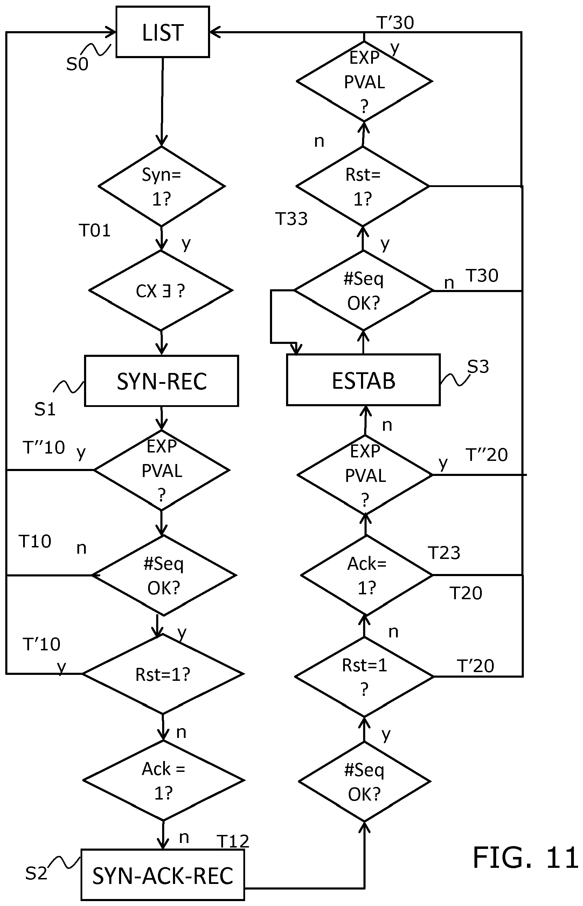

En relation avec la Figure **11****,** on présente un diagramme simplifié des états du pare-feu mis en oeuvre par le procédé de protection d'un réseau de communication selon l'invention, pour le protocole TCP. Il comprend 4 états :
- un état S0 d'écoute (« listening ») apte à transiter selon la transition T01 vers l'état S1 de « connexion initiée » SYN-REC, sur réception d'un message de requête RQ de type « PACKET-IN », c'est-à-dire encapsulant un paquet de données DP, comprenant une information d'événement de connexion instanciée à la valeur « demande d'initiation de connexion » Syn=1. Avant de changer d'état, il crée si besoin une entrée Cn dans sa table de connexion. Il n'a pas besoin de vérifier la légitimité de cette connexion, du fait de l'installation préalable d'une règle initiale adaptée qui implémente les autorisations/interdictions de l'administrateur du réseau. En revanche il commande à l'équipement de commutation 10 l'installation de nouvelles règles associées aux nouvelles transitions possibles T11, T10 depuis l'état S1 et la suppression de la règle initiale RI correspondant à la connexion concernée ;
- l'état S1 d'attente de réception d'un accusé-réception d'initiation ou « SYN-REC », apte à transiter vers un état S2 d'attente de confirmation ou « SYN-ACK-REC » selon une transition T12, sur réception d'un message de requête encapsulant un paquet de données reçu et comprenant une information d'événement de connexion égale Syn-Ack =1 confirmant la réception de l'accusé-réception. Préalablement, le pare-feu peut avantageusement vérifier que les informations relatives aux numéros de séquence reçues dans le paquet sont légitimes, par comparaison avec les valeurs stockées pour le paquet de données précédemment reçu pour cette connexion. Si le résultat est négatif, il bascule vers l'état initial d'écoute par la transition T20. Il peut aussi transiter vers l'état initial sur réception d'un message de requête encapsulant un paquet de données comprenant un événement de demande de remise à zéro de la connexion de type Rst=1, qui le conduit à transiter vers l'état initial via la transition T'20. Dans ce cas il supprime la connexion de sa table TC. Il peut transiter vers l'état initial sur réception d'un message de notification émis par l'équipement de commutation 20 indiquant l'expiration d'une période de validité associée à la transition T12. Dans tous les cas, une fois qu'il a mis à jour l'état courant, il commande à l'équipement de commutation 20 l'installation de nouvelles règles associées aux transitions T23,T20, T'20 depuis ce nouvel état courant et la suppression des précédentes ;
- l'état S2 d'attente de confirmation « SYN-ACK-REC », apte à transiter vers l'état initial selon des transitions T20 ou T'20 si les numéros de séquences ne sont pas considérés comme légitimes ou si un événement de connexion de type Rst=1 a été reçu ou encore s'il a reçu une notification d'expiration d'une période de validité associée à la transition T23. Si l'événement de connexion reçu est la confirmation de la réception de l'accusé réception Ack = 1, après vérification de la légitimité des numéros de séquences, il transite vers un état S3 de connexion établie selon une transition T23. D'abord, il commande à l'équipement de commutation 20 l'installation de nouvelles règles associées aux transitions T33, T30, T'30 depuis ce nouvel état courant et la suppression des précédentes ;
- l'état S3 de connexion établie « ESTABL », apte à transiter vers lui-même (T33) lorsque le paquet de données reçu par l'équipement de commutation 20 comprend des numéros de séquence que le pare-feu considère comme illégitimes, ou vers l'état initial (T 30) si un événement de connexion de type Rst=1 a été reçu ou encore vers l'état initial (T'30) si une notification d'expiration de la règle associée à la transition T33 a été reçue. Cette fois encore, le pare-feu commande l'installation de nouvelles règles adaptées et la suppression des règles devenues caduques.

On comprend que le pare-feu mis en oeuvre par l'invention dans le plan de contrôle d'un réseau de communication de type SDN est adapté pour programmer un équipement de commutation de façon à ce qu'il ouvre et ferme dynamiquement des routes aux paquets de données qu'il reçoit en fonction de l'état de la connexion conformément à la machine à état du protocole de transport utilisé, tout en restant conforme aux spécifications de la norme OpenFlow et aux principes d'une architecture de type SDN. Bien sûr, l'invention n'est pas limitée au protocole de transport TCP, mais s'applique à tout type de protocole de transport à états, tel que SCTP ou autre.

On notera que l'invention qui vient d'être décrite, peut être mise en oeuvre au moyen de composants logiciels et/ou matériels. Dans cette optique, les termes « module » et « entité », utilisés dans ce document, peuvent correspondre soit à un composant logiciel, soit à un composant matériel, soit encore à un ensemble de composants matériels et/ou logiciels, aptes à mettre en oeuvre la ou les fonctions décrites pour le module ou l'entité concerné(e).

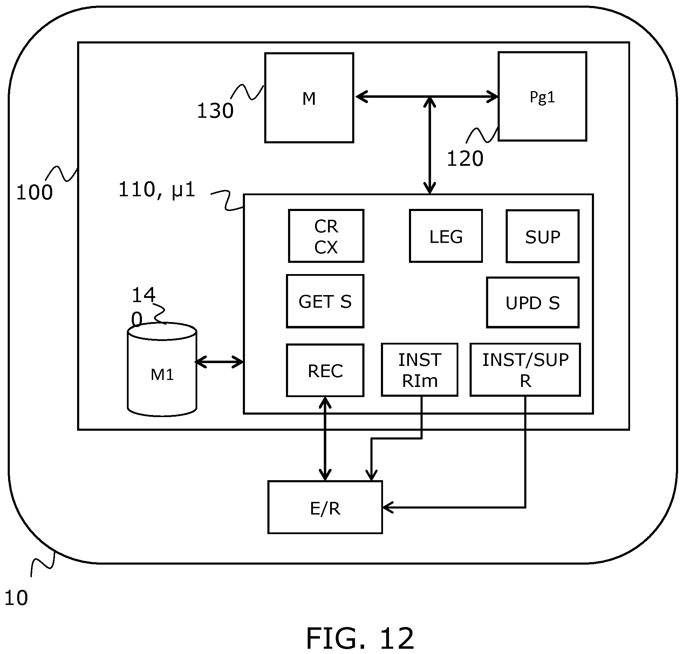

En relation avec la figure **12****,** on présente maintenant un exemple de structure simplifiée d'un dispositif 100 de protection d'un réseau de communication selon l'invention. Le dispositif 100 met en oeuvre le procédé de protection selon l'invention qui vient d'être décrit dans ses différents modes de réalisation en relation avec les Figures **4, 5****,** **7C****,** **9B** **et** **10B****.**

Par exemple, le dispositif 100 comprend une unité de traitement 110, équipée d'un processeur µ1, et pilotée par un programme d'ordinateur Pg1 120, stocké dans une mémoire 130 et mettant en oeuvre le procédé de selon l'invention.

A l'initialisation, les instructions de code du programme d'ordinateur Pg₁ 120 sont par exemple chargées dans une mémoire RAM avant d'être exécutées par le processeur de l'unité de traitement 110. Le processeur de l'unité de traitement 110 met en oeuvre les étapes du procédé décrit précédemment, selon les instructions du programme d'ordinateur 120.

Dans cet exemple de réalisation de l'invention, le dispositif 100 comprend au moins une unité d'installation INST RIm d'au moins une règle initiale, une unité REC de réception d'un message de requête RQ, RQ', RQ" en provenance de l'équipement de commutation 20, une unité GET S d'obtention de l'état courant Si de la connexion concernée, une unité UPD S de mise à jour de l'état courant, une unité INST/SUP R de commande d'installation de nouvelles règles de traitement associées aux transitions depuis le nouvel état courant et de suppression d'anciennes règles associées aux transitions précédentes.

Avantageusement, le dispositif 100 comprend en outre une unité CR CX de création d'une nouvelle connexion, une unité SUP CX de suppression d'une connexion, une unité LEG de vérification de la légitimité d'un paquet de données à partir d'informations relatives à des numéros de séquence et de valeurs stockées en mémoire pour la connexion.

Le dispositif 100 comprend en outre une unité M1 de stockage de la table de connexion TC, des valeurs des numéros de séquence pour une connexion, de règles de traitement à installer dans l'équipement de commutation 10.

Ces unités sont pilotées par le processeur µ1 de l'unité de traitement 110.

De façon avantageuse, un tel dispositif 100 peut être intégré à un équipement de contrôle 10. Le dispositif 100 est alors agencé pour coopérer au moins avec un module E/R d'émission/réception de données de l'équipement de contrôle 10, par l'intermédiaire duquel les messages de requête sont reçus de l'équipement de commutation 20 et les commandes d'installation et de suppression de règles de traitement sont transmises à l'équipement de commutation 20.

Il va de soi que les modes de réalisation qui ont été décrits ci-dessus ont été donnés à titre purement indicatif et nullement limitatif, qu'ils peuvent être combinés entre eux et que de nombreuses modifications peuvent être facilement apportées par l'homme de l'art sans pour autant sortir du cadre de l'invention.

## Revendications

1. Procédé de protection d'un réseau de communication (N), par l'intermédiaire duquel un équipement de communication client (EC), est apte à établir une connexion à états selon un protocole de transport à états avec un équipement de communication serveur (ES), et à lui transmettre des paquets de données (DP), ledit procédé étant **caractérisé en ce qu'**il comprend les étapes suivantes destinées à être mises en oeuvre par un équipement de contrôle (10) du réseau de communication :
- Installation préalable (E1) d'au moins une première règle, dite initiale (RIm), comprenant les sous-étapes suivantes :
∘ obtention (E11) d'informations d'identification d'au moins une connexion (Cm) autorisée par un administrateur du réseau ;
∘ transmission (E12) à l'équipement de commutation de ladite au moins une règle initiale (RIm) de traitement d'un paquet de données de ladite au moins une connexion (Cm), comprenant au moins des premières informations d'identification de la connexion autorisée, une information représentative d'un événement d'initiation de la connexion et une action de retransmission du paquet de données à l'équipement de contrôle ;
- Réception (E2) d'un message de requête (RQ, RQ', RQ"), ledit message comprenant au moins des informations d'identification de la connexion (IC) et au moins une information (IE) représentative d'un événement de connexion, ledit message ayant été émis par un équipement de commutation (20) du réseau, par application d'une première règle de traitement d'un paquet de données émis par l'équipement client (EC) à destination de l'équipement serveur (ES);
- Obtention (E3) d'un état courant (Si) par recherche dans une table de connexion (TC) d'une entrée associant ledit état courant aux dites informations d'identification de la connexion;
- Mise à jour (E4) de l'état courant (Sj) de la connexion à partir de ladite au moins une information représentative d'un événement de connexion et d'un automate à états du protocole de transport;
- Envoi (E5) audit équipement de commutation d'un message de réponse (RP, RP', RP") comprenant :
∘ des deuxièmes règles de traitement (Rij) d'un paquet de données de la connexion, une dite deuxième règle étant associée à une transition (Tij) possible depuis l'état courant mis à jour (Sj) et comprenant les informations d'identification de la connexion, au moins une information représentative d'un événement de connexion et une information représentative d'une action à déclencher pour traiter ledit paquet de données; et une commande de suppression des premières règles de traitement, associées aux transitions précédentes de la connexion.

2. Procédé de protection d'un réseau de communication selon la revendication **1, caractérisé en ce que** ladite au moins une règle initiale comprend en outre une action de transmission du paquet de données à l'équipement destinataire.

3. Procédé de protection d'un réseau de communication selon l'une des revendications **1** ou **2, caractérisé en ce que** l'étape (E4) de mise à jour de l'état courant de connexion comprend les sous-étapes suivantes :
- identification (E41) d'une transition parmi les transitions possibles depuis l'état courant à partir de ladite au moins une information représentative d'un événement de connexion, extraite du message et par application de l'automate à états du protocole;
- Remplacement (E42) de l'état courant par l'état suivant dans l'entrée de la table de connexion.

4. Procédé de protection d'un réseau de communication selon l'une des revendications **1** à **3, caractérisé en ce qu'**une règle de traitement (Rij) associée à une transition d'un état courant (Si) vers un état suivant (Sj) distinct de l'état courant, comprend une action de retransmission du paquet de données vers l'équipement de contrôle.

5. Procédé de protection d'un réseau de communication selon l'une des revendications **1** à **4, caractérisé en ce que**, lesdites règles étant associées à un niveau de priorité prédéterminé, ledit procédé comprend en outre une étape préalable (E0) de transmission à l'équipement de commutation d'une règle (RUR) universelle de traitement d'un paquet de données, associée à un niveau de priorité (P0) inférieur à celui des premières et deuxièmes règles, ladite règle universelle définissant une action de rejet du paquet de données, quelles que soient les valeurs des informations de connexion et de l'information représentative d'un événement de connexion contenues dans le paquet de données.

6. Procédé de protection d'un réseau de communication selon l'une des revendications **1** à **5, caractérisé en ce qu'**une dite règle de traitement (Rij') associée à une transition possible d'un état courant vers un état suivant comprend en outre une information relative à une période de validité de la règle (PVAL) et **en ce que**, sur réception d'un message de requête comprenant au moins les informations d'identification de la connexion (IC) et une information représentative d'un événement de connexion (IE) comprenant une notification d'expiration de la période, le procédé répète les étapes (E4) de mise à jour de l'état courant de connexion et d'envoi (E5) d'un message de réponse.

7. Procédé de protection d'un réseau de communication selon l'une des revendications **1 à 5, caractérisé en ce qu'**une dite règle de traitement (R"ij) comprend en outre des informations d'identification (ID-SEQ) d'informations représentatives d'un numéro de séquence d'un paquet de données émis par l'équipement source et **en ce que**, sur réception d'un message de requête de protection comprenant au moins lesdites informations d'identification de la connexion, les valeurs des informations représentatives du numéro de séquence identifiées, le procédé comprend une étape de vérification de légitimité des valeurs représentatives de ces numéros reçues par comparaison à des valeurs précédemment stockées.

8. Dispositif (100) de protection d'un réseau de communication, par l'intermédiaire duquel un équipement de communication client (EC), est apte à établir une connexion à états selon un protocole de transport à états avec un équipement de communication serveur (ES), et à lui transmettre des paquets de données , ledit dispositif étant **caractérisé en ce qu'**il comprend les unités suivantes :
- Installation (INST RIm) préalable d'au moins une première règle, dite initiale (RIm), comprenant les sous-unités suivantes :
∘ obtention d'informations d'identification d'au moins une connexion (Cm) autorisée par un administrateur du réseau ;
∘ transmission à l'équipement de commutation de ladite au moins une règle initiale (RIm) de traitement d'un paquet de données de ladite au moins une connexion (Cm), comprenant au moins des premières informations d'identification de la connexion autorisée, une information représentative d'un événement d'initiation de la connexion et une action de retransmission du paquet de données à l'équipement de contrôle ;
- Réception (REC) d'un message de requête (RQ, RQ', RQ"), ledit message comprenant au moins des informations d'identification de la connexion (IC) et d'au moins une information (IE) représentative d'un événement de connexion, ledit message ayant été envoyé par un équipement de commutation (20) du réseau, par application d'une première règle de traitement d'un paquet de données émis par l'équipement client (EC) à destination de l'équipement serveur (ES);
- Obtention (GET S) d'un état courant (Si) par recherche dans une table de connexion (TC) d'une entrée associant ledit état courant aux dites informations d'identification de la connexion;
- Mise à jour (UPD S) de l'état courant de la connexion à partir de ladite au moins une information représentative d'un événement de connexion, extraites du message de requête et d'un automate à états du protocole de transport;
- Envoi (INST/SUP R) audit équipement de commutation d'un message de réponse (RP, RP', RP") comprenant :
∘ des deuxièmes règles de traitement (Rij) d'un paquet de données de la connexion, une dite deuxième règle étant associée à une transition (Tij) possible depuis l'état courant mis à jour et comprenant les informations d'identification de la connexion, au moins une information représentative d'un événement de connexion et une information représentative d'une action à déclencher pour traiter ledit paquet de données; et
∘ une commande de suppression des premières règles de traitement, associées aux transitions précédentes de la connexion.

9. Equipement de contrôle (10) d'au moins un équipement de commutation (20), apte à retransmettre un paquet de données émis par un équipement de communication client (EC) vers un équipement de communication serveur (ES) dans un réseau de communication (N), **caractérisé en ce qu'**il comprend un dispositif (100) de protection du réseau selon la revendication **8.**

10. Réseau de communication (N) comprenant au moins un équipement de commutation (20), apte à retransmettre dans ledit réseau un paquet de données émis par un équipement de communication dit équipement client (EC) vers un deuxième équipement de communication, dit équipement serveur (ES) et un équipement de contrôle (10) dudit au moins un équipement de commutation (20) selon la revendication **9.**

11. Programme d'ordinateur (Pg1) comprenant des instructions pour la mise en oeuvre du procédé de protection d'un réseau de communication selon l'une des revendications **1** à **7,** lorsqu'il est exécuté par un processeur.

12. Support d'enregistrement, lisible par un processeur, **caractérisé en ce qu'**il est apte à mémoriser le programme d'ordinateur selon la revendication **11.**

## Patentansprüche

1. Verfahren zum Schutz eines Kommunikationsnetzes (N), über das eine Kundenkommunikationsausrüstung (EC) geeignet ist, eine Zustandsverbindung nach einem Zustandstransportprotokoll mit einer Serverkommunikationsausrüstung (ES) herzustellen, und an sie Datenpakete (DP) zu übertragen, wobei das Verfahren **dadurch gekennzeichnet ist, dass** es die folgenden Schritte umfasst, die dazu bestimmt sind, von einer Steuerausrüstung (10) des Kommunikationsnetzes eingesetzt zu werden:
- Vorinstallation (E1) mindestens einer ersten so genannten Anfangsregel (RIm), umfassend die folgenden Unterschritte:
∘ Erhalt (E11) von Informationen zur Identifikation mindestens einer von einem Administrator des Netzes gestatteten Verbindung (Cm);
∘ Übertragung (E12) der mindestens einen Anfangsregel (RIm) zur Bearbeitung eines Datenpakets der mindestens einen Verbindung (Cm) an die Umschaltausrüstung, umfassend mindestens erste Informationen zur Identifikation der gestatteten Verbindung, eine Information, die für ein Initiierungsereignis der Verbindung und eine Rückübertragungsaktion des Datenpakets an die Steuerausrüstung repräsentativ ist;
- Empfang (E2) einer Anfragenachricht (RQ, RQ', RQ"), wobei die Nachricht mindestens Informationen zur Identifikation der Verbindung (IC) und mindestens eine Information (IE), die für ein Verbindungsereignis repräsentativ ist, umfasst, wobei die Nachricht von einer Umschaltausrüstung (20) des Netzes gesandt wurde, bei Anwendung einer ersten Bearbeitungsregel eines von der Kundenausrüstung (EC) in Richtung der Serverausrüstung (ES) gesandten Datenpakets;
- Erhalt (E3) eines laufenden Zustands (Si) durch Suche eines Eingangs in einer Verbindungstabelle (TC), der den laufenden Zustand den Identifikationsinformationen der Verbindung zuordnet;
- Aktualisierung (E4) des laufenden Zustands (Sj) der Verbindung auf Basis der mindestens einen Information, die für ein Verbindungsereignis repräsentativ ist, und eines Zustandsautomaten des Transportprotokolls;
- Senden (E5) einer Antwortnachricht (RP, RP', RP") an die Umschaltvorrichtung, umfassend:
∘ zweite Bearbeitungsregeln (Rij) eines Datenpakets der Verbindung, wobei eine zweite Regel einem möglichen Übergang (Tij) vom aktualisierten laufenden Zustand (Sj) zugeordnet ist, und umfassend die Identifikationsinformationen der Verbindung, mindestens eine für ein Verbindungsereignis repräsentative Information und eine für eine Information, die für eine auszulösende Aktion, um das Datenpaket zu bearbeiten, repräsentativ ist; und einen Löschbefehl der ersten Bearbeitungsregeln, die den vorhergehenden Übergängen der Verbindung zugeordnet sind.

2. Verfahren zum Schutz eines Kommunikationsnetzes nach Anspruch 1, **dadurch gekennzeichnet, dass** die mindestens eine Anfangsregel ferner eine Übertragungsaktion des Datenpakets an die Bestimmungsausrüstung umfasst.

3. Verfahren zum Schutz eines Kommunikationsnetzes nach einem der Ansprüche 1 oder 2, **dadurch gekennzeichnet, dass** der Schritt (E4) der Aktualisierung des laufenden Verbindungszustands die folgenden Unterschritte umfasst:
- Identifikation (E41) eines Übergangs unter den möglichen Übergängen vom laufenden Zustand auf Basis der mindestens einen für ein Verbindungsereignis repräsentativen Information, die der Nachricht entnommen ist, und bei Anwendung des Zustandsautomaten des Protokolls;
- Ersatz (E42) des laufenden Zustands durch den folgenden Zustand am Eingang der Verbindungstabelle.

4. Verfahren zum Schutz eines Kommunikationsnetzes nach einem der Ansprüche 1 bis 3, **dadurch gekennzeichnet, dass** die Bearbeitungsregel (Rij) die einem Übergang von einem laufenden Zustand (Si) in einen folgenden Zustand (Sj), der sich vom laufenden Zustand unterscheidet, zugeordnet ist, eine Rückübertragungsaktion des Datenpakets zu der Steuerausrüstung umfasst.

5. Verfahren zum Schutz eines Kommunikationsnetzes nach einem der Ansprüche 1 bis 4, **dadurch gekennzeichnet, dass**, wobei die Regeln einem vorbestimmten Prioritätsniveau zugeordnet sind, das Verfahren ferner einen vorherigen Schritt (E0) der Übertragung einer Universalbearbeitungsregel (RUR) eines Datenpakets an die Umschaltausrüstung umfasst, die einem Prioritätsniveau (P0) unter jenem der ersten und zweiten Regeln zugeordnet ist, wobei die Universalregel eine Abweisungsaktion des Datenpakets definiert, unabhängig von den Werten der Verbindungsinformationen und der Information, die für ein Verbindungsereignis repräsentativ ist, die in dem Datenpaket enthalten sind.

6. Verfahren zum Schutz eines Kommunikationsnetzes nach einem der Ansprüche 1 bis 5, **dadurch gekennzeichnet, dass** eine Bearbeitungsregel (Rij'), die einem möglichen Übergang von einem laufenden Zustand in einen folgenden Zustand zugeordnet ist, ferner eine Information zu einer Gültigkeitsdauer der Regel (PVAL) umfasst, und dass bei Empfang einer Anfragenachricht, umfassend mindestens die Identifikationsinformationen der Verbindung (IC) und eine für ein Verbindungsereignis repräsentative Information (IE), umfassend eine Ablaufmitteilung der Dauer, das Verfahren die Schritte (E4) der Aktualisierung des laufenden Verbindungszustands und des Sendens (E5) einer Antwortnachricht wiederholt.

7. Verfahren zum Schutz eines Kommunikationsnetzes nach einem der Ansprüche 1 bis 5, **dadurch gekennzeichnet, dass** eine Bearbeitungsregel (R"ij) ferner Informationen zur Identifikation (ID-SEQ) von Informationen umfasst, die für eine Sequenznummer eines von der Quellenausrüstung gesandten Datenpakets repräsentativ sind, und dass bei Empfang einer Schutzanfragenachricht, umfassend mindestens die Identifikationsinformationen der Verbindung, die identifizierten Werte der für die Sequenznummer repräsentativen Informationen, das Verfahren einen Schritt der Überprüfung der Legitimität der repräsentativen Werte dieser empfangenen Nummern im Vergleich mit vorher gespeicherten Werten umfasst.

8. Vorrichtung (100) zum Schutz eines Kommunikationsnetzes, über das eine Kundenkommunikationsausrüstung (EC) geeignet ist, eine Zustandsverbindung nach einem Zustandstransportprotokoll mit einer Serverkommunikationsausrüstung (ES) herzustellen, und an sie Datenpakete zu übertragen, wobei die Vorrichtung **dadurch gekennzeichnet ist, dass** sie die folgenden Einheiten umfasst:
- Vorinstallation (INST RIm) mindestens einer ersten so genannten Anfangsregel (RIm), umfassend die folgenden Unterschritte:
* Erhalt (E11) von Informationen zur Identifikation mindestens einer von einem Administrator des Netzes gestatteten Verbindung (Cm);
* Übertragung der mindestens einen Anfangsregel (RIm) zur Bearbeitung eines Datenpakets der mindestens einen Verbindung (Cm) an die Umschaltausrüstung, umfassend mindestens erste Informationen zur Identifikation der gestatteten Verbindung, eine Information, die für ein Initiierungsereignis der Verbindung und eine Rückübertragungsaktion des Datenpakets an die Steuerausrüstung repräsentativ ist;
- Empfang (REC) einer Anfragenachricht (RQ, RQ', RQ"), wobei die Nachricht mindestens Informationen zur Identifikation der Verbindung (IC) und mindestens eine Information (IE), die für ein Verbindungsereignis repräsentativ ist, umfasst, wobei die Nachricht von einer Umschaltausrüstung (20) des Netzes gesandt wurde, bei Anwendung einer ersten Bearbeitungsregel eines von der Kundenausrüstung (EC) in Richtung der Serverausrüstung (ES) gesandten Datenpakets;
- Erhalt (GET S) eines laufenden Zustands (Si) durch Suche eines Eingangs in einer Verbindungstabelle (TC), der den laufenden Zustand den Identifikationsinformationen der Verbindung zuordnet;
- Aktualisierung (UPD S) des laufenden Zustands der Verbindung auf Basis der mindestens einen Information, die für ein Verbindungsereignis repräsentativ ist, und eines Zustandsautomaten des Transportprotokolls;
- Senden (INST/SUP R) einer Antwortnachricht (RP, RP', RP") an die Umschaltvorrichtung, umfassend:
∘ zweite Bearbeitungsregeln (Rij) eines Datenpakets der Verbindung, wobei eine zweite Regel einem möglichen Übergang (Tij) vom aktualisierten laufenden Zustand zugeordnet ist, und umfassend die Identifikationsinformationen der Verbindung, mindestens eine für ein Verbindungsereignis repräsentative Information und eine für eine Information, die für eine auszulösende Aktion, um das Datenpaket zu bearbeiten, repräsentativ ist; und
∘ einen Löschbefehl der ersten Bearbeitungsregeln, die den vorhergehenden Übergängen der Verbindung zugeordnet sind.

9. Steuerausrüstung (10) mindestens einer Umschaltausrüstung (20), die geeignet ist, ein Datenpaket zurückzuübertragen, das von einer Kundenkommunikationsausrüstung (EC) an eine Serverkommunikationsausrüstung (ES) in einem Kommunikationsnetz (N) gesandt wurde, **dadurch gekennzeichnet, dass** sie eine Vorrichtung (100) zum Schutz des Netzes nach Anspruch 8 umfasst.

10. Kommunikationsnetz (N), umfassend mindestens eine Umschaltausrüstung (20), die geeignet ist in dem Netz ein Datenpaket zurückzuübertragen, das von einer so genannten Kundenkommunikationsausrüstung (EC) an eine zweite so genannte Serverkommunikationsausrüstung (ES) gesandt wurde, und eine Steuerausrüstung (10) der mindestens einen Umschaltausrüstung (20) nach Anspruch 9.

11. Computerprogramm (Pg1), umfassend Anweisungen für den Einsatz des Verfahrens zum Schutzeines Kommunikationsnetzes nach einem der Ansprüche 1 bis 7, wenn es von einem Prozessor ausgeführt wird.

12. Aufzeichnungsträger, der von einem Prozessor lesbar ist, **dadurch gekennzeichnet, dass** er geeignet ist, das Computerprogramm nach Anspruch 11 zu speichern.

## Claims

1. A method for protecting a communication network (N), through which a client communication device (EC) is adapted to establish a state connection according to a state transport protocol with a server communication device (ES), and to transmit data packets (DP) thereto, said method being **characterised in that** it comprises the following steps intended to be implemented by a control device (10) of the communication network:
- prior installation (E1) of at least a first rule, so-called initial rule (RIm), including the following substeps:
∘ obtaining (E11) identification information of at least one connection (Cm) authorised by a network administrator;
∘ transmitting (E12) to the switching device said at least one initial rule (RIm) for processing a data packet of said at least one connection (Cm), comprising at least first identification information of the authorised connection, information representative of a connection initiation event and an action of retransmitting the data packet to the control device;
- Receiving (E2) a request message (RQ, RQ', RQ"), said message comprising at least identification information of the connection (IC) and at least one piece of information (IE) representative of a connection event, said message having been sent by a switching device (20) of the network, by applying a first rule for processing a data packet sent by the client device (EC) to the server device (ES);
- Obtaining (E3) a current state (Si) by searching a connection table (TC) for an input associating said current state with said identification information of the connection;
- Updating (E4) the current state (Sj) of the connection from said at least one piece of information representative of a connection event and a state automaton of the transport protocol;
- Sending (E5) to said switching device a response message (RP, RP', RP") comprising:
∘ second rules (Rij) for processing a data packet of the connection, such a second rule being associated with a possible transition (Tij) from the updated current state (Sj) and comprising the identification information the connection, at least one piece of information representative of a connection event and information representative of an action to be triggered to process said data packet; and a command for deleting the first processing rules, associated with the previous transitions of the connection.

2. A method for protecting a communication network according to claim 1, **characterised in that** said at least one initial rule further comprises an action of transmitting the data packet to the recipient device.

3. A method for protecting a communication network according to one of claims 1 or 2, **characterised in that** step (E4) of updating the current connection state comprises the following sub-steps:
- Identifying (E41) a transition among the possible transitions from the current state from said at least one information representative of a connection event, extracted from the message and applying the state automaton of the protocol;
- Replacing (E42) the current state with the next state in the input of the connection table.

4. A method for protecting a communication method according to one of claims 1 to 3, **characterised in that** a processing rule (Rij) associated with a transition from a current state (Si) to a next state (Sj) separate from the current state, comprises an action of retransmitting the data packet to the control device.

5. A method for protecting a communication network according to one of claims 1 to 4, **characterised in that** said rules being associated with a predetermined priority level, said method further comprises a prior step (EO) of transmitting to the switching device a universal rule (RUR) for processing a data packet, associated with a priority level (PO) lower than that of the first and second rules, said universal rule defining a rejection action of the data packet, regardless of the values of the connection information and of the piece of information representative of a connection event contained in the data packet.

6. A method for protecting a communication network according to one of claims 1 to 5, **characterised in that** such a processing rule (Rij') associated with a possible transition from a current state to a next state comprises in addition to a piece of information relating to a validity period of the rule (PVAL) and **in that**, upon receipt of a request message comprising at least the identification information of the connection (IC) and a piece of information representative of an event of connection (IE) comprising an expiration notification of the period, the method repeats the steps (E4) for updating the current state of connection and sending (E5) a response message.

7. A method for protecting a communication network according to one of claims 1 to 5, **characterized in that** such a processing rule (Rij") further comprises identification information (ID-SEQ) of information representative of a sequence number of a data packet transmitted by the source equipment and **in that**, upon receipt of a protection request message comprising at least said identification information of the connection, the values information representative of the sequence number identified, the method comprises a legitimacy check step of the values representative of these numbers received compared to previously stored values.

8. A device (100) for protecting a communication network, through which a customer communication device (EC) is adapted to establish a state connection according to a state transport protocol with a communication server device (ES), and to transmit data packets (DP) thereto, said device being **characterised in that** it comprises the following units:
- A prior installation (INST RIm) of at least a first rule, so-called initial rule (RIm), comprising the following sub-units:
∘ obtaining identification information of at least one connection (Cm) authorised by a network administrator;
∘ transmitting to the switching device said at least one initial rule (RIm) for processing a data packet of said at least one connection (Cm), comprising at least first identification information of the authorised connection, a piece of information representative of a connection initiation event and an action of retransmitting the data packet to the control device;
- Receiving (REC) a request message (RQ, RQ', RQ"), said message comprising at least identification information of the connection (IC) and at least one piece of information (EI) representative of a connection event, said message having been sent by a switching device (20) of the network, by applying a first rule for processing a data packet sent by the client device (CE) to the server device (SE);
- Obtaining (GET S) a current state (Si) by searching a connection table (TC) for an input associating said current state with said identification information of the connection;
- Updating (UPD S) the current state of the connection from said at least one piece of information representative of a connection event, extracted from the request message, and a state automaton of the transport protocol;
- Sending (IMST/SUP R) to said switching device a response message (RP, RP', RP") comprising:
∘ second rules (Rij) for processing a data packet of the connection, such a second rule being associated with a possible transition (Tij) from the updated current state (Sj) and comprising the identification information the connection, at least one piece of information representative of a connection event and information representative of an action to be triggered to process said data packet; and
∘ a command for deleting the first processing rules, associated with the previous transitions of the connection.

9. A control device (10) of at least one switching device (20) adapted to retransmit a data packet transmitted by a client communication device (EC) to a server communication device (ES) in a network communication (N), **characterised in that** it comprises a device (100) for protecting the network according to claim 8.

10. A communication network (N) comprising at least one switching device (20) adapted to retransmit in said network a data packet transmitted by a communication device, so-called client device (EC) to a second communication equipment, so-called server device (ES) and control device (10) of said at least one switching device (20) according to claim 9.

11. A computer program (Pgl) comprising instructions for implementing the method for protecting a communication network according to one of claims 1 to 7, when executed by a processor.

12. A processor readable recording medium, **characterised in that** it is adapted to store the computer program according to the claim 11.
